# EUROPEAN PATENT APPLICATION

(11) **EP 1 059 749 A2**
(43) Date of publication of application: **13.12.2000**
(21) Application number: 00304323.9
(22) Date of filing: 22.05.2000
(51) Int. Cl.: H04H 1/00

(54) **Method of receiving and reproducing a first audio signal, and of reproducing, in response to user action, a second audio signal which has been received together with the first signal**

(30) Priority: 25.05.1999 US 320132
(71) Applicant: Command Audio Corporation, Redwood City, CA 94065 (US)
(72) Inventor: Loewenthal, William J., San Mateo, California 94001 (US); Wegener, Albert W., Portola Valley, California 94028 (US)
(74) Representative: Freeman, Jacqueline Carol

(57) **Abstract**

Two kinds of audio information are played by a specialized receiver to a user: audio samples that are played automatically, and audio programs that are cached, and played only in response to a predetermined action (e.g. pressing of a button in the receiver) during the playing of a related audio sample. Specifically, the predetermined action selects an audio program for storage in local memory, and the program is made accessible to the user either immediately after the predetermined action, or a short while thereafter. Immediate access is possible if one or more audio programs have been received and stored (in an inaccessible manner) prior to the user's predetermined action. Immediate access is not possible in other situations: for example, for audio programs that relate to live audio samples, such as a traffic report (wherein the related audio program contains additional details about accidents and alternate routes) or financial news (wherein the related audio program contains the most current stock quotes) that are being played to the user while still fresh. Once a user-selected audio program has ken made accessible, the user can perform another predetermined action (e.g. pressing a different button) at any time, in order to retrieve and play the stored audio program from the local memory. Alternatively, the user can transfer the stored audio program to another device (e.g. over a cable, wirelessly, or through a peripheral to a memory card).

## Description

This application is related to the commonly owned U.S. Patent Application Serial No. 09/272,633 filed by William J. Loewenthal and Thomas M. Linden on March 18, 1999, entitled "Program Links and Bulletins For Audio Information Device".

Appendix A, which is part of the present disclosure is a listing of non-executable pseudo code illustrating computer programs and related data that can be coded in the C language for implementing a reception controller and a playback controller in an audio receiver, for use with one illustrative implementation of this invention as described more completely below.

A portion of the disclosure of this patent document contains material which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

Numerous systems transfer information by using frequency modulated (FM) carriers (e.g. a radio frequency electromagnetic signal), as described in, for instance, U.S. Patent 5,152,011. Also known is a single sideband communication system with FM data capability for transmission of analog voice signals, as described in, for example, U.S. Patent 4,852,086. However, a portable radio for converting such information embedded in such FM radio subcarriers into sound limits the user to getting only information that is currently being transmitted. It is also well known to use FM radio sideband broadcasting to specially adapted computers for transmission of, for example, news and financial information. However, computer skills are needed to operate such systems.

U.S. Patents Nos. 5,406,626; 5,524,051; and 5,590,195 all issued to John O. Ryan disclose methods and systems for information dissemination using what is, in some embodiments, a dedicated audio receiver device; these patents are each incorporated herein by reference in their entirety. The disclosed service and system and similar currently known systems, permit a user to listen to specific information content when and where he wants to, independent of the time of transmission. A dedicated receiver, which is typically portable, extracts digitized alphanumeric data or compressed audio data from a transmission, for instance RF transmissions or a computer data link. The dedicated receiver stores the received data (as a set of data files) in a local (semiconductor or disk drive) memory. The user of the receiver can then at any later time select using a menu structure and control buttons, one of the data files for playback.

Data can also be transmitted in the Vertical Blanking Interval of a television signal. An additional channel of communication for data or audio transmission is the Separate Audio Program channel available in television broadcasting.

In television broadcasting, a user can purchase television programs on a event-by-event basis, in a method known as "pay-per-view." For instance, a specific channel may run nothing but previews for movies. After previewing a movie, the user can purchase the movie by selecting a "Buy" option in a on-screen menu. When a movie is purchased, the user may be limited to just viewing the movie, and cannot record the movie. If the user wishes to record the movie, the user may be required to select a different option, "Buy and Record" in the menu (this is a feature of the receiving device and not of the program distributor). See, for example, information provided on the Internet at "www.directv.com".

In a different arrangement, a user can purchase from a store (such as CIRCUIT CITY) an optical disk on which is stored a television program in an encoded format. After the user brings the disk home and inserts the disk in a video player, the user must receive authorization to view the television program. On receipt of authorization, the video player allows the television program to be viewed as often as desired within a time period (e.g. 48 hours). After this time period, the user must pay for and receive authorization to view the same television program. If the user so desires, the user may pay for authorization to watch the television program an unlimited number of times.

### SUMMARY

In accordance with the invention, a device and method receive two kinds of audio information via one or more radio frequency electromagnetic signals, e.g. in a compressed digital format and/or in real-time analog format from a conventional radio station. A first kind of audio information is "audio samples" that are directly played to the user (either immediately or after storage). A second kind of audio information is "audio programs" that have a predetermined relationship with the audio samples, and which are immediately stored (but not played) on receipt. A stored audio program is not played unless a predetermined action is performed by the user during the playing of the related audio sample. Such audio programs can be played immediately after the predetermined action if the audio programs have been previously received and stored. If the audio programs are not in storage when the predetermined action is performed, the audio programs are made accessible to the user as soon as they are received and stored.

Examples of audio samples include songs (e.g. included in a "top 40" list), headlines (e.g. from CNN), financial news, sports news, weather news, traffic report, and talk shows. Examples of audio programs include albums (that contain the related song and additional songs by the same artist), in-depth news reports (that provide detailed stories related to headlines news), and stock reports (that contain analysts' recommendations and past performance of stocks mentioned in the financial news).

The audio programs can be received on the same carrier signal as the audio samples (e.g. if both kinds of audio information are transmitted in a compressed format), thereby to time share a single demodulator (having two output lines) in a device that plays the audio information (also called "audio receiver"). Alternatively, the audio programs can be received via a digital signal that is different from an analog signal used to carry the audio samples. In yet another embodiment, the audio programs are received via a second carrier (e.g. a digital signal) that is different from a first carrier (e.g. another digital signal) that carries the audio samples.

The audio programs can be received prior to, contemporaneous with, or after receipt of the related audio samples. On receipt at the device, the audio programs are temporarily cached in a local memory (e.g. for 1 second or more) prior to being played. The audio programs are played only in response to a predetermined action that indicates the user's interest in an audio program (e.g. of more detail) related to a currently playing audio sample. If the audio programs are received prior to the audio samples, the audio programs are not available for play until the predetermined action is performed, although the audio programs are held in the local memory. Such an audio program can be played (or made accessible for play) immediately after the predetermined action.

If the audio programs are received subsequent to the audio samples, then a selected audio program is accessible to the user (for playback or transfer to another device) any time after receipt (which occurs only after a delay from the predetermined action). Such an embodiment may be required for audio programs that relate to live audio samples, such as a traffic report (wherein the related audio program contains additional details about accidents and alternate routes) or financial news (wherein the related audio program contains the most current stock quotes) that are played to the user while still fresh.

In one embodiment, a device and method play audio information to the user by: (1) receiving audio information (2) playing the audio information if the information includes an audio sample, (3) storing an audio program in a local memory (in one implementation only if the audio information includes an audio program that is indicated by a stored identifier), and (4) receiving a selection signal from a user interface subsystem, the selection signal indicating an audio program related to the currently playing audio sample. On receipt of the selection signal, the selected audio program is either played or made accessible to the user.

Once a selected audio program is accessible, the user can perform another predetermined action (e.g. pressing a different button) at any time, to retrieve the stored audio program from memory and to play the audio program. Alternatively, the user can transfer the stored audio program to another device (e.g. over a cable, wirelessly, or through a peripheral device to a memory card). Audio programs that have been made accessible to the user are available for play (or transfer) in an "on-demand" manner (i.e. as and when requested by the user).

Playing of audio information as described herein maintains backward compatibility, by extending the existing radio systems and Ryan's systems (described above). Specifically, the user does not do anything different from his/her normal practice of listening to a favorite radio station, e.g. in the car while driving to/from work, or in the gym while exercising. When the user finds an audio sample that is currently playing to be of more than passing interest, the user simply performs a predetermined action (e.g. presses a button), and the device makes available to the user an audio program that is related to the then currently playing audio sample. The user can play the audio program when it becomes accessible, or may listen to additional audio samples for as long as desired, and play the audio program at any later time.

Therefore, the device and method provide simplicity and convenience to the user in accessing an audio program, just by extending the user's normal practice of listening to a favorite radio station when pressing a button to access the audio program. Moreover, playing of an audio sample prior to playing a corresponding audio program allows the user to determine (according to the user's taste) the desirability of listening to the audio program (from having listened to the audio sample). Therefore, a user need not waste time in listening to audio programs that may be of merely passing interest or of no interest to the user. Instead, the user can spend as much of his/her listening time he/she desires listening exclusively to material of interest to him/her.

Furthermore, if a monetary transaction is required for access to an audio program, the user pays only for audio programs that are of interest to the user, as determined from the predetermined action that is performed after listening to the related audio samples. This device and method have the further advantage of enabling a user to acquire for listening audio programs that are of interest to the user, without the need for connecting to a computer network and going through a download routine or going to a store to purchase audio programs on conventional storage media.

### BRIEF DESCRIPTION OF THE DRAWINGS

FIG. 1 illustrates, in a flow chart, various acts of a method in accordance with the invention.
FIG. 2 illustrates, in a high level block diagram, an audio receiver in accordance with the invention.
FIG. 3 illustrates, in a timing diagram, two kinds of audio information being received by the audio receiver of FIG. 2 over a single digital signal, in a time-shared manner.
FIGs. 4, 6, 8, 10 and 15 respectively illustrate, in intermediate level block diagrams, five different embodiments of the audio receiver of FIG. 2.
FIGs. 5, 7, 9 and 12 respectively illustrate, in flow charts, various acts performed by the audio receivers of FIGs. 4, 6, 8 and 10 respectively.
FIG. 11 illustrates two carrier signals for audio information of the type described herein.
FIGs. 13 and 14 illustrate alternative flow charts for acts to be performed by the audio receiver of FIG. 10 in two alternative embodiments of the invention.
FIG. 16 illustrates, in a lower-level block diagram, circuitry included in one embodiment of the audio receiver of FIG. 15.
FIGs. 17A-17D illustrate, in low-level circuit diagrams, an FM receiver included in the audio receiver of FIG. 16.
FIGs. 18A-18C illustrate, in low-level circuit diagrams, filters included in the audio receiver of FIG. 16.

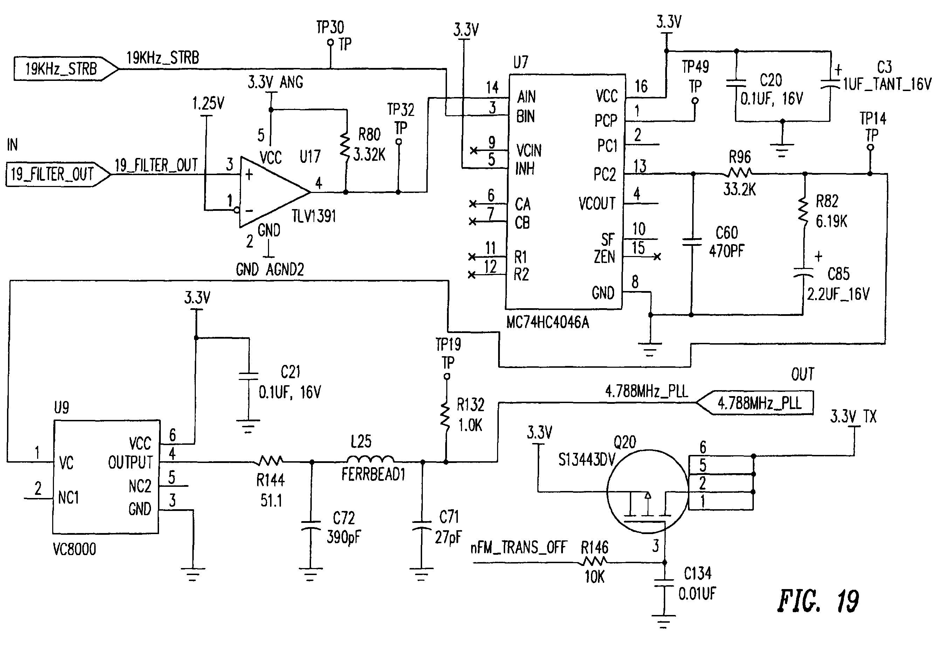

FIG. 19 illustrates, in a low-level circuit diagram, a phase locked loop circuit included in the audio receiver of FIG. 16.
FIG. 20 illustrates, in a graph, specifications for a band pass filter illustrated in FIG. 18A.
FIGs. 21A-21D illustrate, in low-level circuit diagrams, an audio subsystem included in the audio receiver of FIG. 16.
FIGs. 22A-22D illustrate, in low-level circuit diagrams, a modulator included in the audio receiver of FIG. 16.

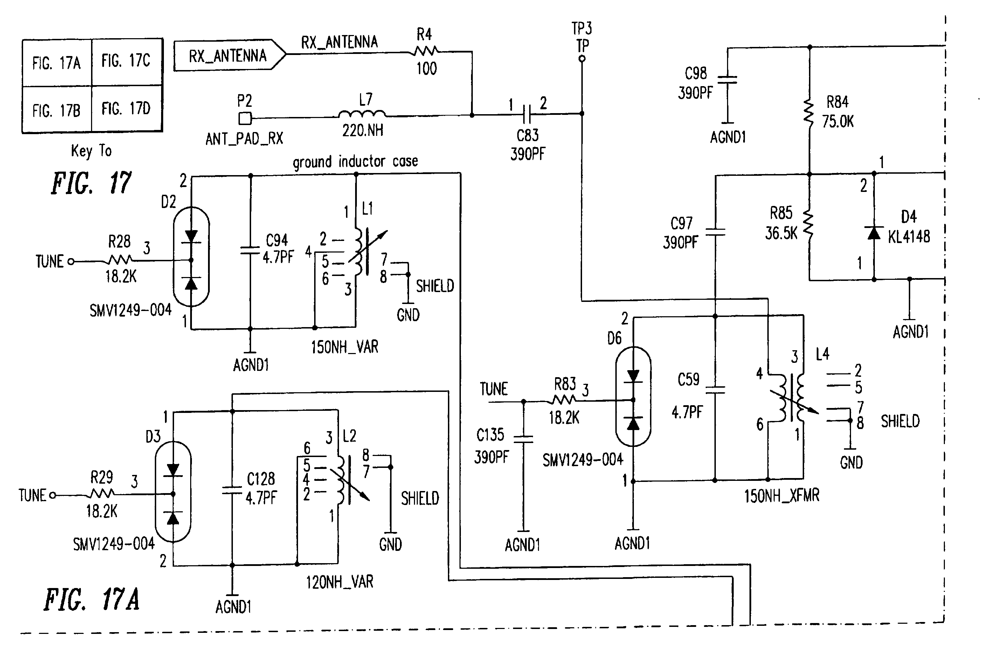

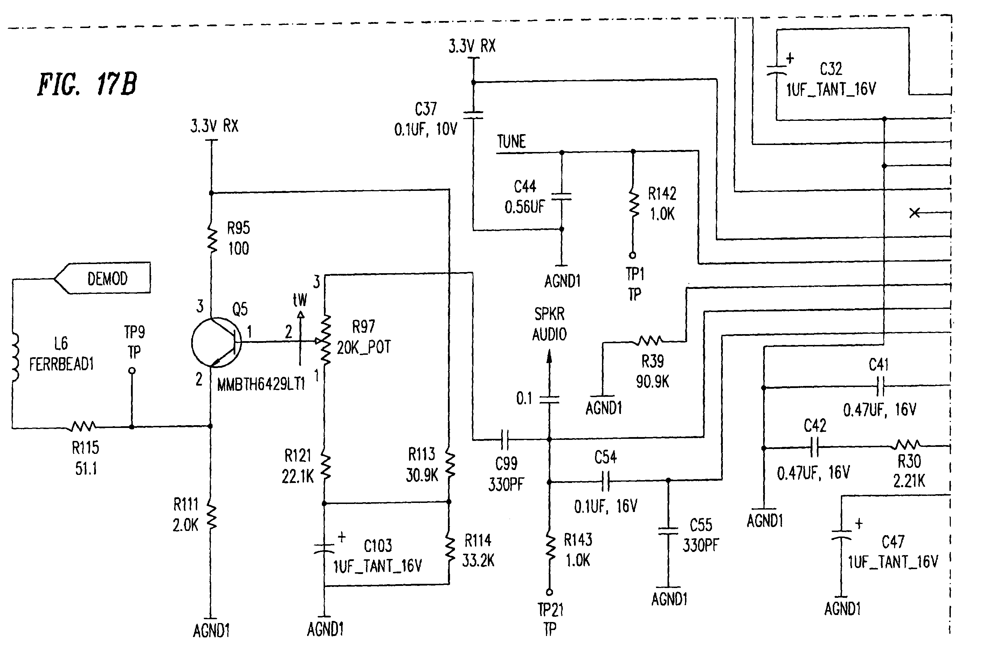

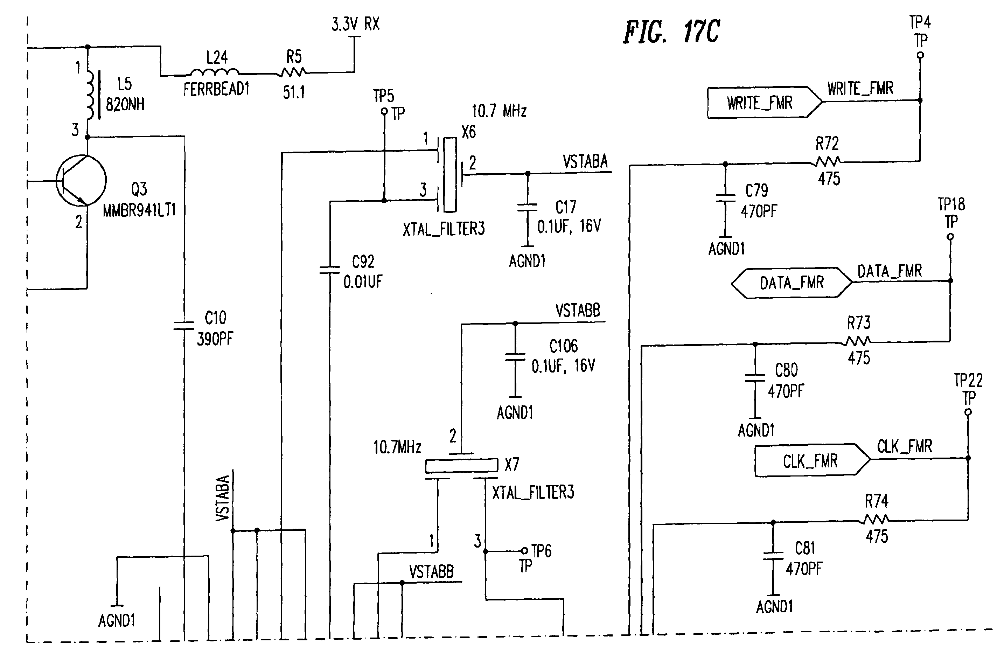

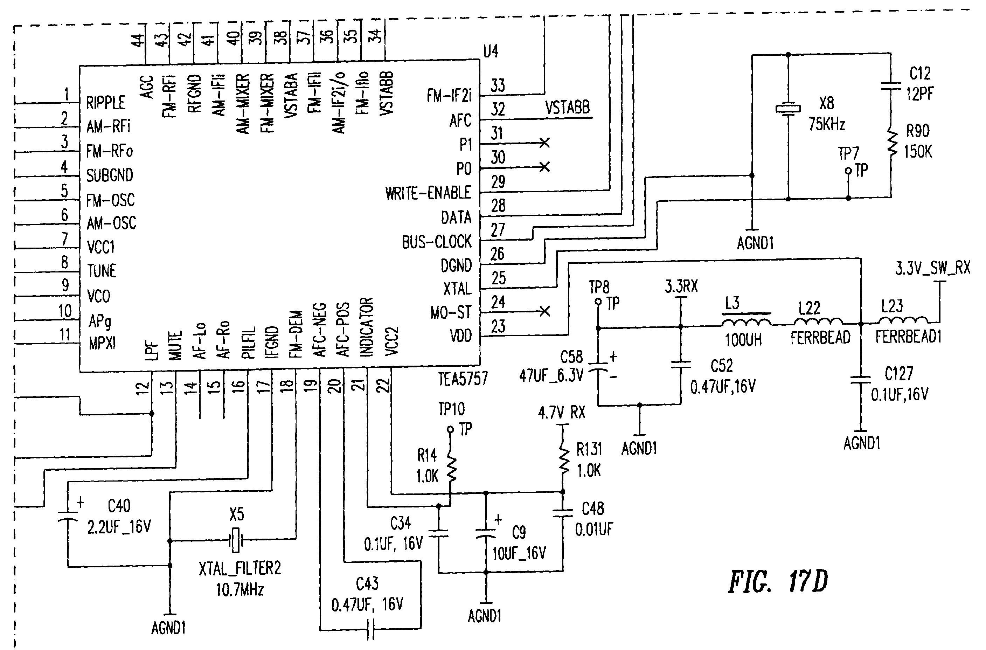

FIGs. 17, 18, 21 and 22 illustrate, in keys, the arrangement of the respective FIGs. 17A-17D, 18A-18C, 21A-21D, and 22A-22D for circuitry in one implementation of the audio receiver of this invention.

### DETAILED DESCRIPTION

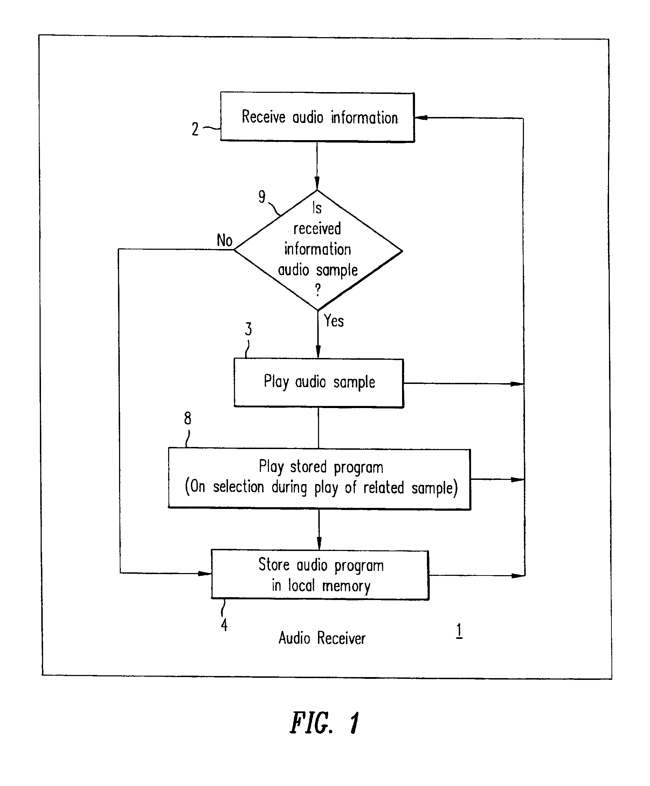

In accordance with the invention, audio information is received (as illustrated by act 2 in FIG. 1) and either played directly (as illustrated by act 3), or stored for later playback (as illustrated by act 4). Specifically, the stored audio information (also called "audio programs") is played (as illustrated by act 8) only in response to a predetermined action by the user while other audio information (also called "audio samples") is being played.

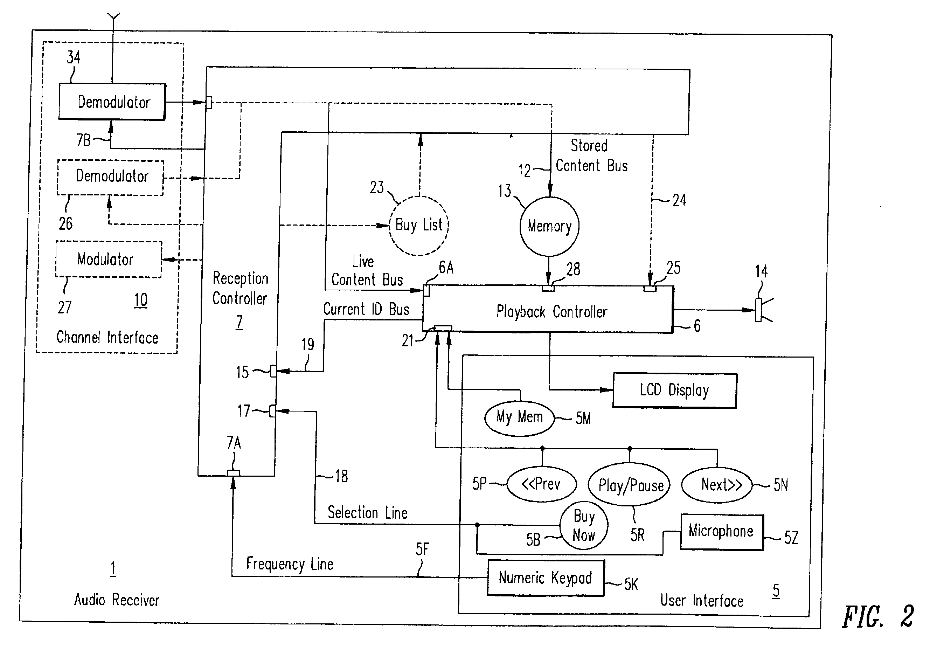

In one embodiment, the method illustrated in FIG. 1 is performed by an audio receiver 1 (FIG. 2) that receives audio information through a channel interface subsystem 10, and plays audio samples through a speaker 14, while storing audio programs in memory 13. Depending on the implementation, audio receiver 1 can be a hand-held unit that is portable, having the form factor of, for example, a WALKMAN device available from Sony Corporation. Alternatively, audio receiver 1 can have the form factor of a car radio, for installation in the dashboard of any automobile. Audio receiver 1 can also have the form factor of a cassette player of a rack mounted stereo system, of a cellular phone, or of a hand-held computer (such as the PALM PILOT).

Channel interface subsystem 10 accesses any channel for transmission of audio information, e.g. a digital satellite channel (ku, S and L bands), FM subcarrier, and/or digital television and radio channels. See, for example, U.S. Patent 5,809,472 granted to Eric F. Morrison, and entitled "Digital Audio Data Transmission System Based On The Information Content Of An Audio Signal" (incorporated by reference herein) for circuitry related to such a channel interface subsystem. The channel accessed by channel interface subsystem 10 may be specified by reception controller 7 on a line 7B, and in turn reception controller 7 may receive the channel to be accessed on a signal at a port 7A that is coupled to user interface subsystem 5 (e.g. by a frequency line 5F that in turn is coupled to a numeric keypad 5K, thereby to allow the user to enter a FM frequency to be used). Depending on the implementation, audio receiver 1 can include one or more demodulators, e.g. demodulators 34 and 26 wherein demodulator 34 demodulates one kind of audio information (e.g. audio samples from an analog FM signal) and demodulator 26 demodulates another kind of audio information (e.g. audio programs from a compressed digital signal).

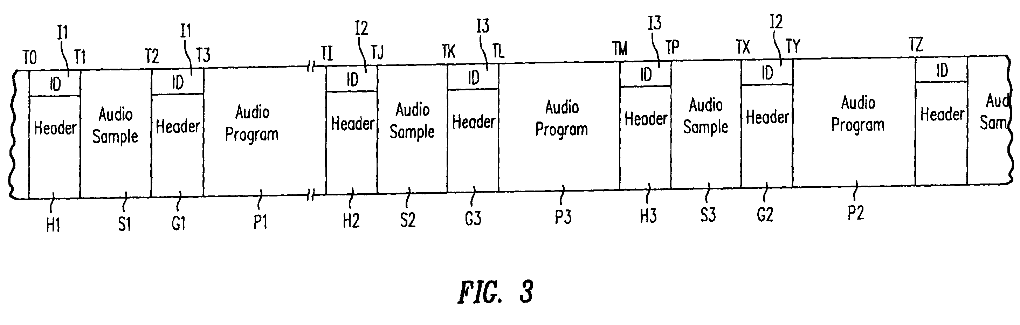

The audio information received by channel interface subsystem 10 is of at least two kinds (as illustrated in FIG. 3): audio samples S1-S3 that are broadcast during times T1 to T2, TJ to TK and TY to TZ, and audio programs P1, P3 and P2 that are broadcast during times T3 to TI, TL to TM and TY to TZ. Each of audio programs P1-P3 has a predetermined relation to a corresponding one of audio samples S1-S3. The predetermined relation is implemented by an identifier that is common to the audio program and the audio sample that are being related. For example, a common identifier I1 is present in a header H1 of audio sample S1 and also in a header G1 of audio program P1 (similarly, identifiers I2 and I3 relate samples S2 and S3 to the respective programs P2 and P3).

In this embodiment, headers H1 and G1 precede the respective audio informations S1 and P1, although in other embodiments the order can be reversed. Similarly, an audio sample and an audio program related to the audio sample need not be carried in any particular order relative to one another. In one example, program P1 follows sample S1, while in another example, program P3 precedes sample S3.

In one embodiment, the predetermined relation between the two kinds of audio information is the relation of a part to a whole. Specifically, in a first example the audio program is a "book-on-tape" and the audio sample is a chapter within the "book-on-tape"; in a second example, the audio program is a music album and the audio sample is a song within the album. In another embodiment, the predetermined relation is the sharing of a common property. Specifically, in a first example both the audio sample and the audio program are published by the same publisher (e.g. another song in the same music album). In a second example both are created by the same author, such as another talk by the same speaker. In a third example, both are identical to one another (i.e. the audio program and the audio sample are the same).

Audio programs P1-P2 can be longer or shorter (i.e. play for a different duration) than audio samples S1-S3 (preferably, but not necessarily, programs P1-P2 are longer than audio samples S1-S3). Also in one implementation, audio programs P1-P2 have to be paid for (either by purchase or rental) prior to being made accessible to the user, while audio samples S1-S3 can be played free of charge. Therefore, during normal operation of audio receiver 1, a user can simply listen to audio samples S1-S3, that are played contemporaneously with receipt (e.g. in real time). On finding an audio sample S1 to be of interest, the user performs a predetermined action (e.g. presses a button), to indicate interest in storage of a related audio program P1 for later playback.

Although the audio programs P1-P2 are interspersed between the broadcast of audio samples S1-S3, audio receiver 1 plays audio samples S1-S3 sequentially (i.e. one after another). In one embodiment, audio samples S1-S3 are automatically played to the user contemporaneous with receipt (e.g. with a delay of less than 10 seconds between receipt and play). In contrast, audio programs P1-P2 cannot be played to the user on receipt. Instead, audio programs P1-P2 are automatically stored in a memory 13 of audio receiver 1, and made available for play (or played) only in response to a predetermined action by the user (that may be performed at any time relative to such storage) during the playback of a related audio sample S1.

In one embodiment, audio samples S1-S3 are broadcast in a compressed format, so that when uncompressed and played by audio receiver 1, each audio sample lasts until the end of receipt of another audio sample. For example, audio sample S1 may be played from time T2 to time TK, and audio sample S2 may be played from time TK to time TZ, thereby ensuring continuous (i.e. without any pauses) play of audio samples, when played sequentially. The feature of continuous playback requires scheduling support by the sender/head end (i.e. requires transmission of samples and programs of appropriate lengths at appropriate times so that samples can be played continuously).

In one embodiment, audio samples S1-S3 we isolated from one another, although played in a predetermined sequence, and are carried on the same carrier signal as audio programs P1-P2, as illustrated in FIG. 3. Examples of a sequence of audio samples include songs (e.g. included in a "top 40" list), headlines (e.g. from CNN), financial news, sports news, weather news, traffic report, and talk shows (e.g. by Bernie Ward or Rush Limbaugh), thereby to provide audio information in a manner similar to a conventional radio station.

At any time during the playing of an audio sample, the user can perform a predetermined action (e.g. speaking into a microphone 5Z, or pressing a button 5B labeled "BUY NOW" in user interface subsystem 5 as illustrated in FIG. 2), to indicate the user's interest in an audio program that is related to the currently playing audio sample. In response to the predetermined action, audio receiver 1 makes a stored copy of the related audio program accessible to the user (either for immediate playing, or for playback at a later time depending on the embodiment).

In one embodiment, audio receiver 1 includes a playback controller 6 that supplies to speaker 14 one of the two kinds of audio information, either audio samples (also called "live audio information") from port 6A or audio programs (also called "stored audio information") from port 28. Audio receiver 1 of this embodiment also includes a reception controller 7 that sorts (as illustrated by act 9 in FIG. 1) the audio information (based on a code within the header) into one of the two kinds: audio samples and audio programs.

If the audio information is an audio sample, reception controller 7 passes the audio sample via live content bus 7A to input port 6A of playback controller 6 for supply to speaker 14 (as illustrated by act 3 in FIG. 1) in a contemporaneous manner (e.g. within a delay of less than a 10 seconds between receipt and play). If the audio information is an audio program (and optionally only if the receiver is authorized to store this specific audio program by performance of a monetary transaction, and is added to, e.g. a buy list 23 illustrated in FIG. 2), reception controller 7 passes the audio program via stored content bus 12 to memory 13 for storage therein. At a later time, in response to another predetermined action by the user, playback controller 6 supplies the audio programs from memory 13 to speaker 14 (as illustrated by act 23 in FIG. 1).

Therefore, audio receiver 1 plays audio programs P1-P2 only from a memory 13, and not directly (i.e. without storage). As noted above, on receipt by reception controller 7, audio programs P1-P2 are immediately stored in memory 13 (optionally only if such storage is authorized). Furthermore, as memory 13 is included in audio receiver 1, memory 13 is local to the user (also referred to as "local memory"). Audio programs P1-P2 are not accessible by the user, without first being stored in local memory 13.

After such storage in local memory 13 (and optionally only after proper authorization), audio programs P1-P2 can be played to the user at any time (i.e. are accessible in an "on-demand" manner). Depending on the implementation, such audio programs P1-P2 can be played as often as desired (i.e. playable forever), only N times (wherein N is a predetermined number that is based on the amount of money paid by the user), or only until T time (wherein T is the time or date after which audio programs P1-P2 cannot be played, e.g. because they are deleted).

In this embodiment, reception controller 7 and playback controller 6 together impose a sufficient delay (e.g. by storage in memory if necessary) between receipt of an audio sample and playing of the audio sample. Therefore, in the absence of any user action, audio sample S1 is played from time T2 to TK, and sample S2 is played from time TK to TZ i.e. played sequentially, one after another without any pause. If the audio information is an audio program, reception controller 7 passes the audio program via a bus 12 to a local memory 13 (see FIG. 2) for storage therein (see act 14 in FIG. 1).

Reception controller 7 determines that the user is interested in a specific audio program from the receipt of an active signal on control port 17 during the play of a related audio sample that may be identified by an identifier (also called "content identifier" in Appendix A) at status port 15 (FIG. 2). Note that control port 17 is coupled by a line 18 to button 5B (thereby to receive a selection signal from user interface subsystem 5). Moreover, status port 15 is coupled to a bus 19 of playback controller 6. During playing of an audio sample, playback controller 6 passes to bus 19 the identifier of an audio program related to the currently playing audio sample. Therefore, at any time while playing an audio sample, reception controller 7 recognizes operation of button 5B as indicating an interest in the related audio program.

Thereafter, when the audio program identified by the stored identifier is received, reception controller 7 stores the audio program in local memory 13 (as described above in reference to act 14 illustrated in FIG. 1). Memory 13 is coupled by a bus to another input port 28 of playback controller 6. Therefore, a list of audio programs held in memory 13 (FIG. 2) can be played at any time, for example by operation of a button (also called "directory button") 5M labeled "MY MEM" in user interface subsystem 5 that is coupled to a control port 21 of playback controller 6, followed by pressing one of buttons 5N, and 5P respectively labeled "NEXT>", "<<PREV" to select an appropriate one of the audio programs.

Specifically, in response to an active signal from button 5M, playback controller 6 plays on speaker 14 a list of titles of all available audio programs in memory 13. In response to the user pressing one of buttons 5N and 5P, playback controller 6 skips titles or repeats a previously played tide, thereby to allow the user to navigate through the list. When playback controller 6 plays a title of interest on speaker 14, the user presses a button 5R labeled "PLAY/PAUSE" in user interface subsystem 5, and in response playback controller 6 plays the audio program (stored in memory 13) through speaker 14 (as illustrated by act 23 in FIG. 1).

During the playback of an audio program from memory 13, playback controller 6 provides on bus 19 an identifier of yet another audio program that is related to the program currently being played (e.g. both programs are by the same artist or both programs are on the same subject or in the same genre). Therefore, when "BUY NOW" is pressed during playback of an audio program (rather than during an audio sample), the "yet another audio program" is added to buy list 23 in the same manner as described herein for the audio program.

Note that controllers 6 and 7 of audio receiver 1 (see FIG. 2) can be implemented as two tasks in a microprocessor (e.g. PENTIUM available from Intel Corporation) that has been programmed with software (e.g in the C language) to perform one or more acts of the type described herein. Alternatively, controllers 6 and 7 as well as memory 13 can be implemented by a single application specific integrated circuit (ASIC) that has been designed (e.g. in VERILOG language) to perform one or more acts of the type described herein.

Numerous modifications and adaptations of audio receiver 1 would be apparent to the skilled artisan in view of the disclosure. For example, when receipt of an audio program is completed, reception controller 7 can activate a signal on a line 24 coupled to a port 25 of playback controller 6, thereby to indicate that a user-selected audio program has been made accessible. Playback controller 6 may respond to the active signal at port 25 by generating a predetermined audio message (e.g. a distinctive chime) on speaker 14. Instead of, or in addition to speaker 14, audio receiver 1 can include a light emitting diode (LED) that is turned on when a user-selected audio program is received and turned off when played.

Depending on the size of memory 13 (FIG. 2), audio receiver 1 can receive and temporarily store one or more audio programs in a compressed format in memory 13, prior to receipt and play of a related audio sample. Such audio programs are made inaccessible to the user (e.g. marked as "hidden"), until the predetermined action is performed. On performance of the predetermined action, and if a user-selected audio program is among the stored audio programs, such an audio program is made accessible immediately after the predetermined action.

The advantage of storing all audio programs as they are received is that a selected audio program is made accessible to the user immediately in response to the predetermined action while playing a corresponding audio sample (i.e. there is no latency from the time the "BUY NOW" button is pressed). In contrast, when an audio program is saved only after a monetary transaction, the size of memory 13 (FIG. 2) is smaller (as compared to storing all audio programs), but this embodiment imposes the latency between the time the "BUY NOW" button is pressed and the time the audio program becomes accessible. Either of these two embodiments may be implemented as described herein.

Note that in the embodiment described above in reference to FIGs. 1A-1C, only one audio program is related to any one audio sample, and on receipt of a selection signal from user interface subsystem 5, reception controller 1 simply stores the identifier in buy list 23. However, instead of a direct one-to-one relation between an audio sample and an audio program, the predetermined relation can be implemented in an indirect manner as a one-to-many relation, wherein in response to the user action, a list of titles of related audio programs is played (either via a voice prompt or via a visual prompt or both), and the user selects (by another predetermined action) one of the titles from the list. In such an embodiment, a header of a currently playing audio sample includes a list of titles of audio programs, and their identifiers (as illustrated below, in appendix A).

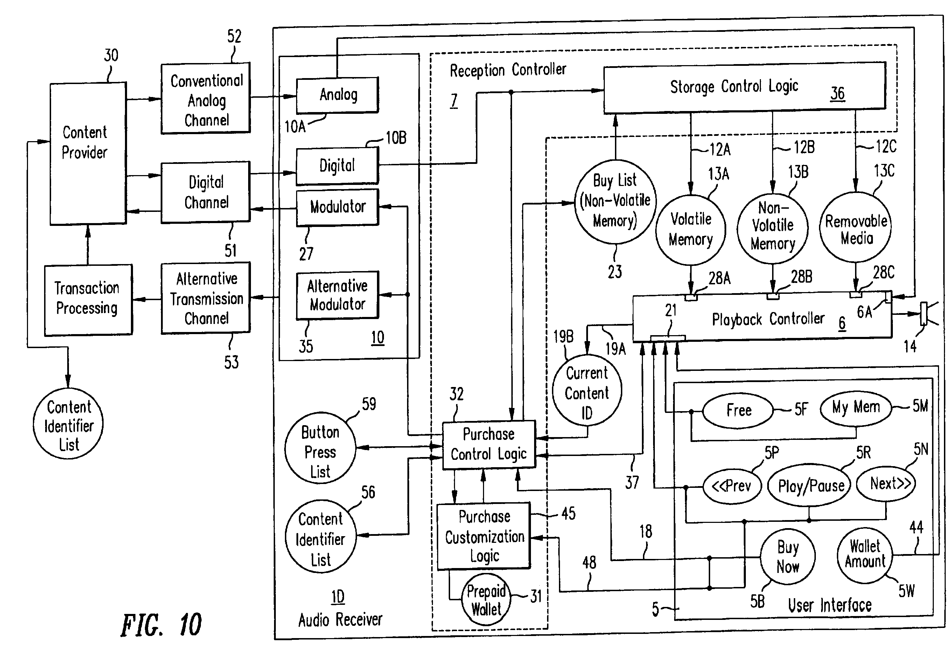

Furthermore, audio programs can be transmitted on a carrier signal different from the carrier signal used for audio samples, in which case audio receiver 1 includes the additional demodulator 26 for receiving such audio programs. In such an embodiment (not shown), reception controller 1 need not perform act 9 of FIG. 1 (i.e. sorting of audio information into audio samples and audio programs), and therefore does not include an input sorter. Instead, such a demodulator 10A can be directly coupled by a bus (called "live content" bus) to port 6A of playback controller 6 (for use as described, for example in reference to FIG. 10).

Also, audio receiver 1 can include a modulator 27 for use by reception controller 7 in indicating to a content provider 30: the user's name and interest in a user-selected audio program (thereby to allow the content provider to bill the user for use of the audio program). In such an embodiment, prior to receipt of each audio program, reception controller 7 receives a list of authorizations from content provider 30, and only if the user's name (or other identifier) is included in the list does controller 7 pass the audio program to bus 12. Therefore, reception controller 7 restricts access to audio programs only to paying users.

Depending on the embodiment, a user may pay for outright purchase of the audio program, and after such purchase, the audio program is available for unlimited playing, and for transfer to another device or to a removable storage media. Instead of a purchase, the user can pay for rental of the audio program for a single play (or a single day, or a predetermined number of plays). Also, the user may be allowed to receive a first play of each audio program free, but required to pay for a subsequent play (either by purchase or by rental as described above).

Furthermore, all audio programs may be made accessible in an unconditional manner e.g. if the user pays a monthly subscription fees (either prior to or subsequent to the predetermined action). Alternatively, one or more audio programs may be made accessible even without subscription (free), e.g. as promotional material (such as infomercials), if supported by playing commercials, or for a limited period of time - - as an introduction of the device to the user.

Also depending on the embodiment, the monetary transaction can be of different types, such as addition of a price of the audio program to a balance (owed by the user) in a credit card account, or subtraction of such a price from a balance (owned by the user) in a prepaid account (such as an e-wallet). If a prepaid account is used, the price can be in integral units, wherein each unit corresponds to a single audio program, and units in an account are decremented one at a time during each monetary transaction. Also, the prepaid account can be maintained in a memory that is remote from the user (e.g. at a content provider, such as a radio station or a cable head end, from which one or more transmission signals are broadcast).

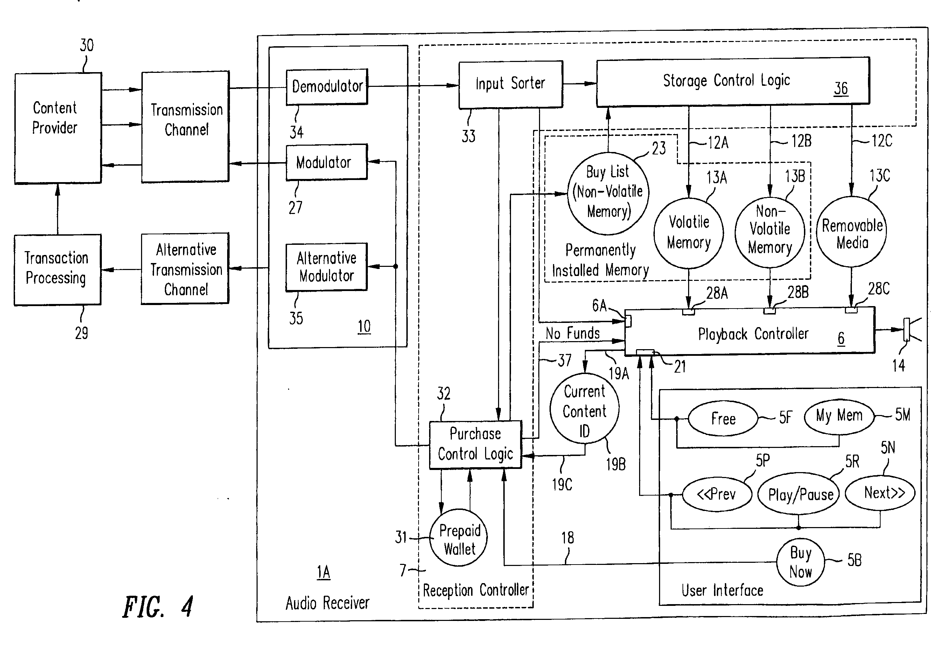

In one implementation, audio receiver 1A (FIG. 4) is similar or identical to audio receiver 1 described above and identical reference numerals in FIGs. 1 and 4 indicate identical components, except for the differences noted below. Audio receiver 1A (FIG. 4) includes a prepaid wallet 31 (in reception controller 7) implemented in a non-volatile memory (e.g. a file on a hard disk, wherein the file contains a single number indicative of the current balance in the user's account).

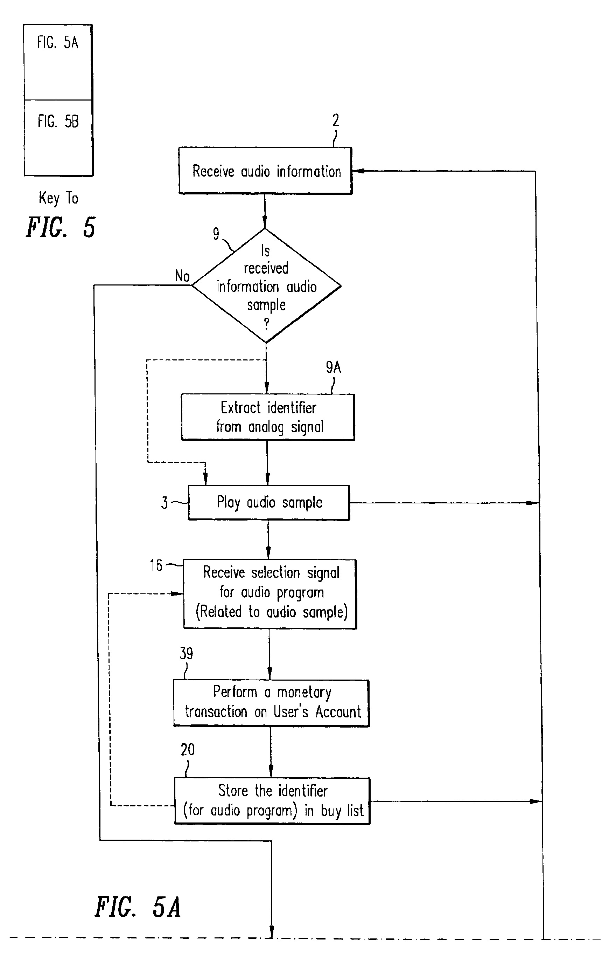

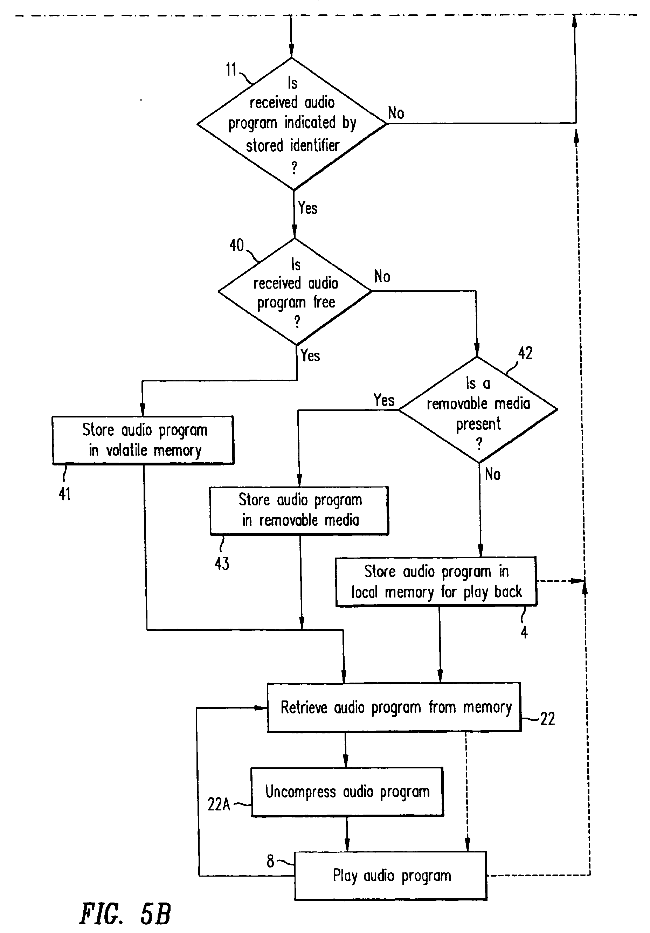

Therefore, wallet 31 is implemented local to the user, and audio receiver 1A need not send a request (via modulator 27) to content provider 30, and need not wait for authorization. Instead, reception controller 7 includes a purchase control logic 32 that locally generates an authorization. Specifically, on receipt of a selection signal on line 18 (as illustrated by act 16 in FIG. 5), logic 32 performs a monetary transaction on wallet 31 (as illustrated by act 39 in FIG. 5, and as illustrated by function "removeEcashFromWallet" in appendix A). After the monetary transaction is successfully completed, logic 32 passes the selected audio program's identifier to buy list 23, to be stored therein as illustrated by act 20 in FIG. 5.

If there is insufficient balance (in the form of money or credits) in wallet 31, purchase control logic 32 sends to playback controller 6 an active signal via a "nofunds" line 37 (also illustrated below in reference to "on sale" list navigation in appendix A). In response to the active signal on line 37, playback controller 6 plays the message "not enough e-cash" on speaker 14, thereby to inform the user of the financial problem.

In response to such a message, the user may obtain a refill of wallet 31, e.g. by personally calling a transaction processing center 29 to provide a credit card number of the user's account to be debited to pay for the refill. Alternatively, the user may press button 5B in response to such a message, and enter the credit card number via a numeric keypad (not shown in FIG. 4) in user interface subsystem 5, thereby to instruct purchase control logic 32 to send a refill request to transaction processing center 29 (e.g. via an alternative modulator 35 shown in FIG. 4). In yet another embodiment, the user inserts a card (similar to a credit card) that carries an unused balance (for transfer of the balance into wallet 31).

On completion of a credit card transaction (in either of the two just-described embodiments), content provider 30 transmits a refill signal that is passed by input sorter 33 to purchase control logic 32 that in turn resets the balance in wallet 31. Thereafter, purchase control logic 32 deducts the appropriate amount (of money or credits) from wallet 31 in the normal manner (as illustrated below in appendix A), followed by passage of the audio program's identifier (called "content identifier" in Appendix A) to buy list 23.

Note that in the absence of wallet 31, purchase control logic 32 implements act 39 (FIG. 5) by passing a purchase request to content provider 30 (via one of modulators 27 and 35), and thereafter waits for a transaction authorization from input sorter 33. Input sorter 33 in turn receives the authorization from content provider 30 (after appropriate debit of the user's prepaid account or credit card account). On receipt of the authorization from sorter 33, purchase control logic 32 passes the audio program's identifier to buy list 23 (as illustrated by act 20 in FIG. 5).

In this implementation as well, storage control logic 36 compares an identifier retrieved from a header of an audio program (e.g. in the format described below in appendix A) with each identifier in buy list 23 in the manner described above. In case of a match, passes the audio program to one of three buses 12A-12C that are respectively coupled to three different memories located within audio receiver 1A. Specifically, in this implementation, audio receiver 1A includes a first memory 13A (e.g. a volatile memory, such as a DRAM), a second memory 13B (e.g. a nonvolatile memory, such as a flash memory of size, e.g. 16 MB) that is installed permanently in audio receiver 1A, and a third memory 13C (e.g. another nonvolatile memory, such as a memory card of size, e.g. 8 MB) that is removable from audio receiver 1A (hereinafter simply "removable media").

Storage control logic 36 checks if an audio program is "free" (e.g. as indicated by an audio program's identifier being an integer in the range 0 to 10,000), and if so passes the audio program to bus 12A, for storage into a volatile memory 13A (as illustrated by acts 40 and 41 in FIG. 5). Alternatively, if the audio program is not free (i.e. was paid for by the user, and indicated, for example by an integer outside the above-described range), then storage control logic 36 (FIG. 4) passes the audio program to bus 12C if a removable storage media 13C is present (as illustrated by acts 42 and 43 in FIG. 5) and otherwise passes the audio program to bus 12B for storage in non-volatile memory 13B (as illustrated by act 14 in FIG. 5).

In this implementation, playback controller 6 is coupled to each of memories 13A-13C, thereby to allow the user to access any of the stored audio programs. Moreover, in this implementation, user interface subsystem 5 includes two directory buttons 5F and 5M that are respectively labeled "FREE" and "MY MEM". In response to the user pressing one of buttons 5F and 5M, playback controller 6 plays a list of audio programs in the respective memories 12A and 12C (or 12B if media 13C is absent).

Thereafter, the user can make a selection of one of the stored audio programs by pressing play button 5R on user interface subsystem 5. In response to the user's selection, playback controller 6 retrieves the selected audio program from non-volatile memory (as illustrated by act 22 in FIG. 5), if necessary uncompresses the audio program (as illustrated by act 22A), and thereafter plays the audio program (as illustrated by act 8).

The user can replace a removable storage media 13C with another such media (as often as desired), transfer the accessible audio programs from non-volatile memory 13B to the inserted storage media 13C thereby to generate (in a set of such media) an archive of all audio programs that were paid for by the user. Thereafter, the user can play any such stored audio program, by simply inserting a removable storage media 13C (containing the stored audio program) into receiver 1.

Removable storage media 13C can be, for example, a memory card (such as a PCMCIA card, or a smart card), a disk (such as an optical disk or a magnetic disk), or a tape. Such a removable storage media may also be encoded with software for implementing one or more acts described herein (e.g. in reference to FIGs. 2, 5, 7 and 9), thereby to allow a pre-existing audio receiver 1 to be programmed with such software for use as decribed herein. The PCMCIA standard is well known in the art, as illustrated at, for example, http://www.pc-card.com/pccardstandard.htm, and in U.S. Patent 5,440,244 (that is incorporated by reference herein in its entirety). The smart card standard is also well known in the art, as illustrated at, for example, http://www.smartcard.co.uk.

Preferably, but not necessarily, playback controller 6 performs decompression (and optionally decryption) on one or both kinds of audio information, e.g. after receipt of compressed audio samples at port 6A, and after receipt of compressed audio samples at port 28, as illustrated by act 22A in FIG. 5. Therefore, audio programs are normally stored in memory 13 in a compressed (and optionally encrypted) format. In an alternative embodiment, reception controller 7 performs decompression (again as per act 22A in FIG. 5), and decompressed audio samples are passed to live content bus 7A while decompressed audio programs are passed to stored content bus 12. Note that if audio samples are not compressed (e.g. received in an analog format), no decompression is performed on the audio samples.

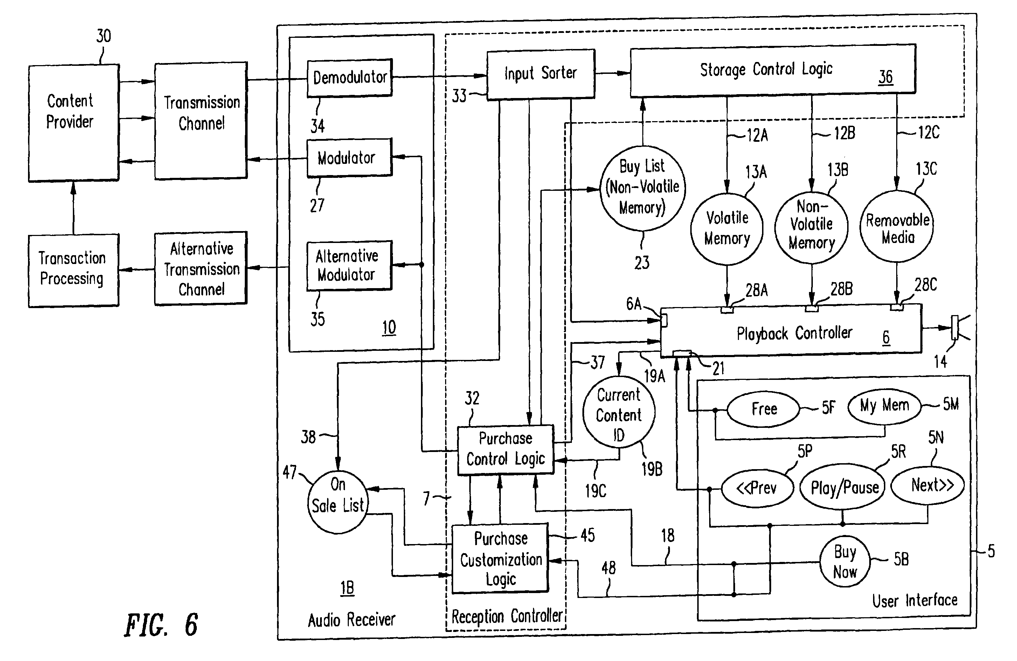

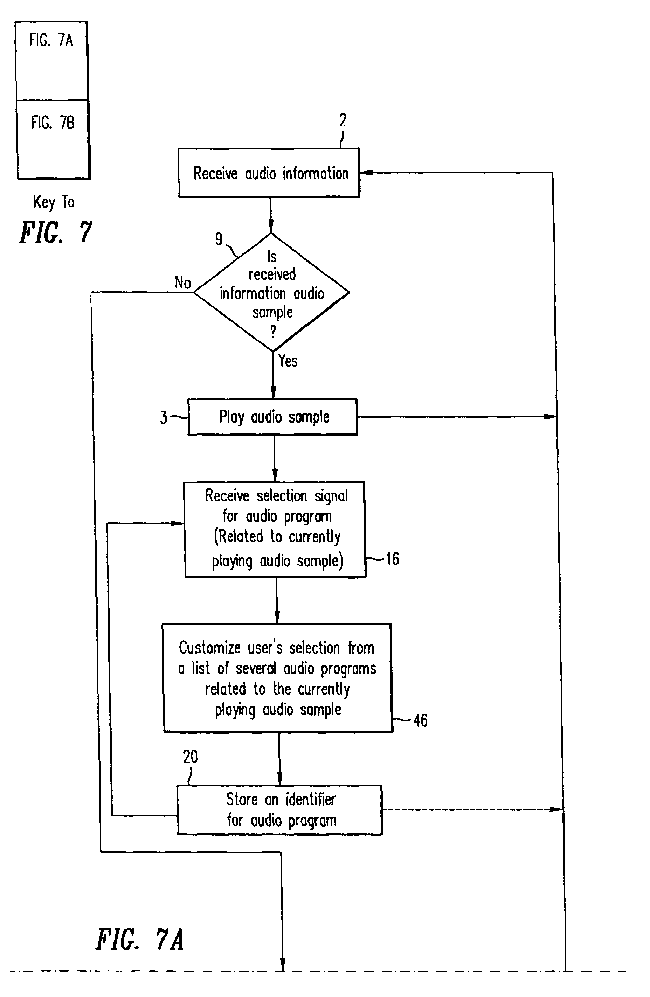

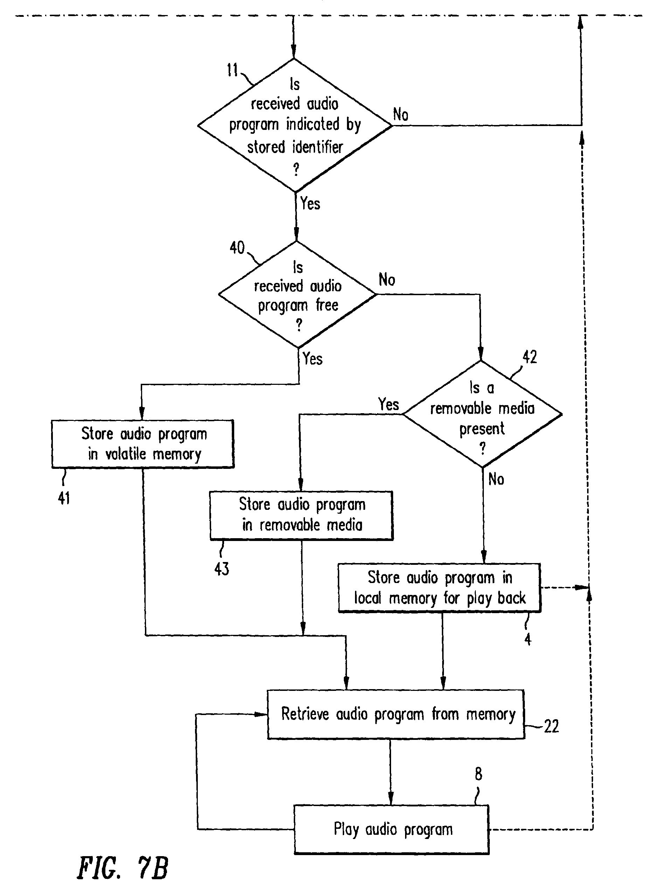

In another implementation, audio receiver 1B (FIG. 6) is similar or identical to audio receiver 1A described above, and identical reference numerals in FIGs. 4 and 6 indicate identical components, except for the differences noted below. Audio receiver 1B (FIG. 6) includes a purchase customization logic 45 that customizes (as illustrated by act 46 in FIG. 7) the user's selection from among several kinds of audio programs that are all related in some manner to the currently playing audio sample. Specifically, in the header of an audio sample that is currently playing (as illustrated below in appendix A), audio receiver 1B receives a list 47 (FIG. 6) of audio programs that are available for sale. List 47 can be implemented in volatile memory, because a new list is received with each audio sample. List 47 is coupled to input sorter 33 by bus 38, so that list 47 is initialized from a list received in a header.

In this implementation, when purchase control logic 32 receives an active signal on line 18 (FIG. 6), logic 32 drives a signal active to purchase customization logic 45. In response to the active signal, purchase customization logic 45 plays the titles in list 47 via speaker 14, thereby to indicate list 47 to the user for selection therefrom. Purchase customization logic 45 is coupled to user interface subsystem 5 to allow the user to navigate through the list (e.g. by pressing buttons 5P and 5N), before making a selection (e.g. by pressing button 5B).

Therefore, in this implementation, logic 45 receives a list of audio programs related to a currently playing audio sample, indicates at least a portion of the list to the user. The user interface subsystem generates a selection signal only after such playing of list 47. In response to a selection signal on bus 48, purchase customization logic 45 passes to purchase control logic 32 the audio program's identifier, for storage in buy list 23. Exemplary pseudo-code for implementation of purchase customization logic 45 is provided in Appendix A.

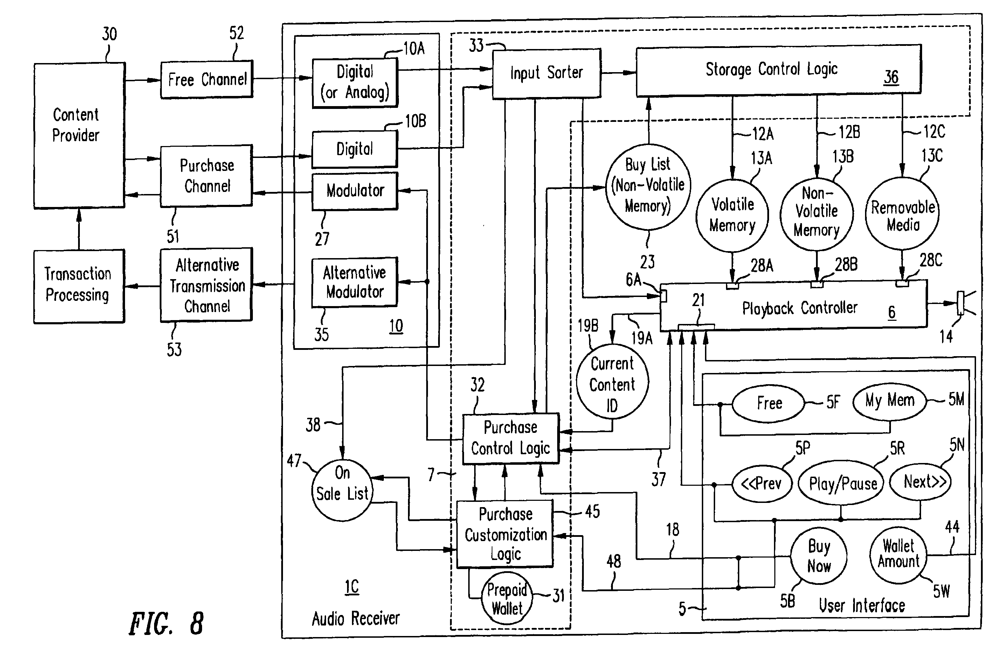

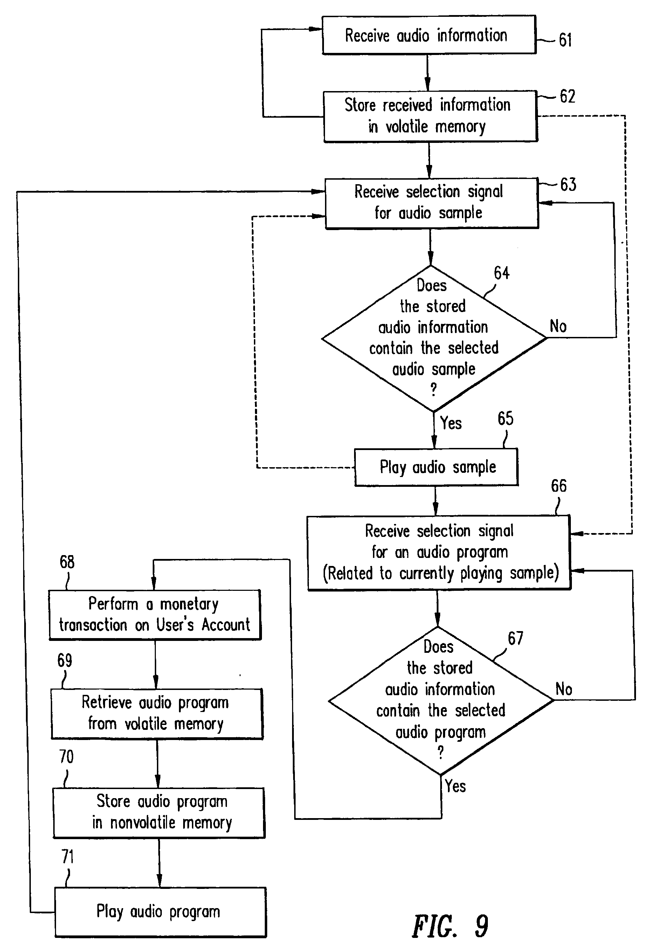

In yet another implementation, audio receiver 1C (FIG. 8) is similar or identical to audio receiver 1B described above, except for the differences noted below. Specifically, each of channels 51 and 52 may carry compressed digital audio signals, and audio receiver 1C includes two demodulators 10A and 10B. In one embodiment, demodulators 10B and 10A respectively receive audio programs that have been purchased and audio programs that are free. Demodulator 10A also receives audio samples (as illustrated by act 61 in FIG. 9). In this embodiment, all received audio information is stored as illustrated by act 62 in FIG. 9.

Next, a user can use interface 5 (FIG. 8) to select one of the stored audio samples for playback. On receipt of a selection signal from interface 5 (as illustrated by act 63 in FIG. 9), playback controller 6 (FIG. 8) checks (as illustrated by act 64 in FIG. 9) if the stored audio information in volatile memory 13A (FIG. 8) contains the selected audio sample, and if so plays the audio sample (as illustrated by act 65 in FIG. 9). If the selected audio sample is not available, controller 6 returns to act 63, to allow the user to make another selection.

Thereafter, during the playing of one of the audio samples, playback controller 6 receives (as illustrated by act 66 in FIG. 9) a selection signal (by a user's performance of the predetermined action) and checks (in act 67) if the stored audio information contains the selected audio program. If not, playback controller 6 returns to act 66. If the selected audio program is present in volatile memory 13A, controller 6 performs a monetary transaction on the user' s account (in act 68 of FIG. 9).

Specifically, wallet amount button 5W (FIG. 8) allows the user to determine the amount of money (e.g. in the form of e-cash) that is currently available in the prepaid wallet 31 (also called "e-wallet"). Specifically, when wallet amount button 5W is pressed, user interface subsystem 5 drives an active signal via line 44 to playback controller 6 that in turn communicates via a bus 37 with purchase control logic 32 to determine the current amount of money present in wallet 31, and then plays the amount through speaker 14. Thereafter, the user presses "BUY NOW" button 5B to authorize payment for the selected audio program.

After the monetary transaction, controller 6 retrieves the audio program from volatile memory 13A (in act 69), stores the audio program in nonvolatile memory 13B (in act 70), and plays the audio program (in act 71). After an audio program is played, playback controller 6 returns to act 63 to receive another selection signal for an audio sample. Note that after play of one audio sample (in act 65), a user may select another audio sample for play (and controller 6 returns to act 63). Moreover, depending on the embodiment, a user may have an option to skip playing an audio sample and may directly listen to an audio program (thereby to require playback controller 6 to go to act 66 directly, without playing an audio sample).

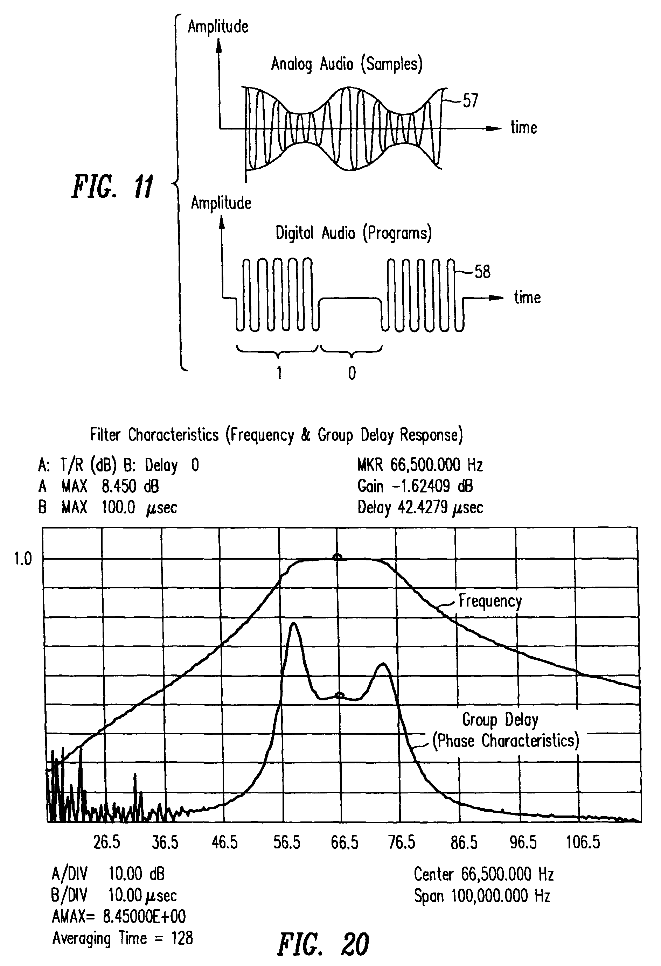

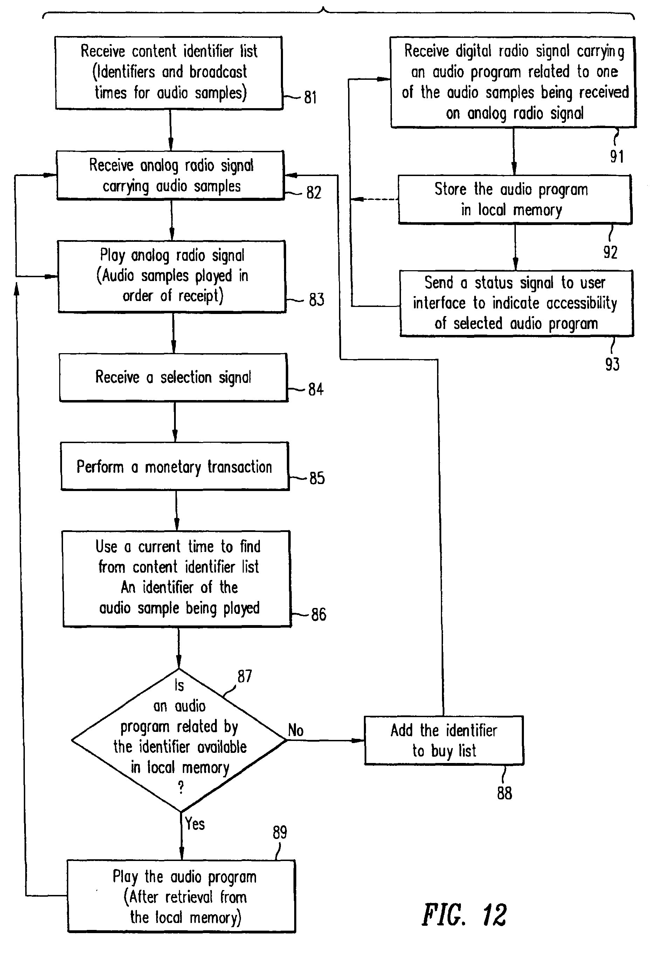

In another embodiment, an audio receiver 1D (FIG. 10) includes an analog demodulator 10A, and channel 52 carries an analog audio signal (e.g. a conventional AM radio signal 57 illustrated in FIG. 11). As noted above, input sorter 33 is not required and demodulator 10A is directly coupled to playback controller 6 for playing the analog audio signal without storage (see FIG. 1). Specifically, audio samples are received (as illustrated by act 82 in FIG. 12) by audio receiver 1D from an analog audio signal in an uninterrupted sequence, in the order transmitted from a conventional radio station. Playback controller 6 simply couples port 6A to speaker 14, thereby to allow the audio samples to be played (as illustrated by act 83 in FIG. 12) in the order of receipt.

At any point during the playing of the audio samples, if reception controller 7 receives a selection signal (as illustrated by act 84), reception controller 7 performs a monetary transaction (as illustrated by act 85). Thereafter, reception controller 7 uses the current time to determine (as illustrated by act 86) from a list 56 (hereinafter "content identifier list") the identifier of an audio program (or list of audio programs) selected by the user. Content identifier list 56 is received at any prior time, as illustrated by act 81.

In one implementation content identifier list 56 contains a list of all identifiers and broadcast times of audio samples, e.g. in the following format:

| Begin Time | End Time | Identifier |
|---|---|---|
| 7:00:01 am | 7:10:00 am | 15210.57AZ6 |
| 7:10:01 am | 7:12:00 am | 15210.57AZ7 |

Although only two exemplary entries are shown above, such a list 56 may contain entries for a predetermined time period, e.g. one hour or one day, and is transmitted on digital channel 51 on a periodic basis (e.g. hourly or daily). In act 86, reception controller 7 compares the current time of day (i.e. the time at which the selection signal is received from the user interface subsystem), with entries in list 56 to find the identifier of a specific audio sample that is currently playing. Once the identifier is determined, reception controller 7 uses the identifier in the manner described herein (e.g. stores the identifier as illustrated by act 88 in FIG. 12).

Depending on the implementation audio programs may always be transmitted prior to the audio samples (as illustrated by S2 and P3 in FIG. 3), or audio programs may always be transmitted subsequent to the audio samples (as illustrated by S1 and P1 in FIG. 3). In the former implementation, the selected audio program may be available in local memory, and therefore the audio program is played immediately in response to the user's action (after retrieval from the local memory), as illustrated by act 89. In the latter implementation, the identifier of the selected audio program is added to Buy List 23 (FIG. 10), as illustrated by act 88. On receipt of a digital radio signal carrying an audio program (as illustrated by act 91 in FIG. 12), audio receiver 1D stores the audio program (as illustrated by act 92). In the former implementation, audio receiver 1D stores all audio program, but in the latter implementation receiver 1D stores an audio program only if indicated in Buy List 23. In the latter implementation, receiver 1D may send a status signal to user interface subsystem 5 (that may have a light emitting diode) to indicate accessibility of one or more audio programs selected by the user.

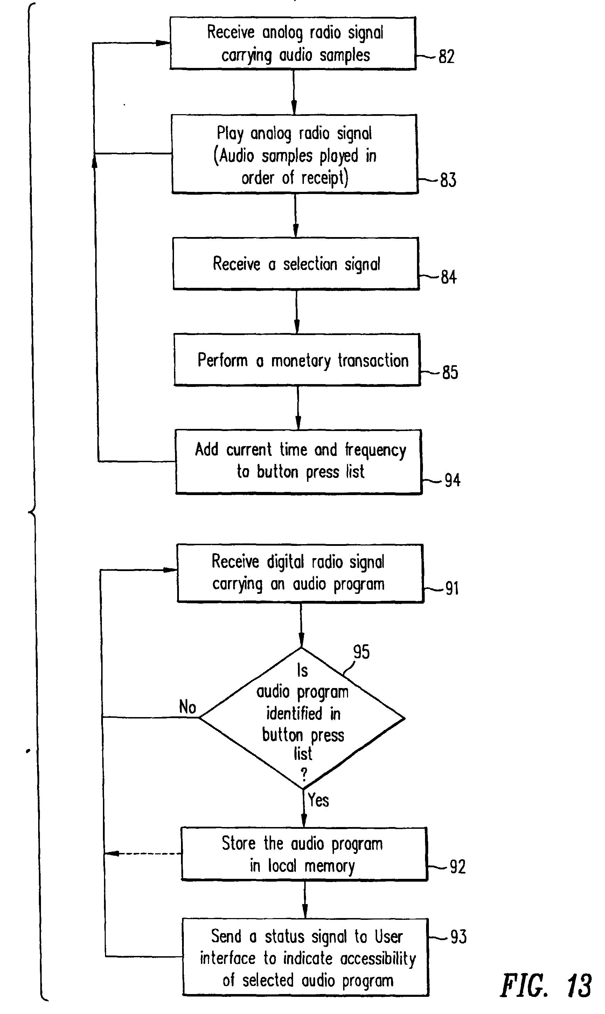

In another implementation, content identifier list 56 is not received and maintained in receiver 1D. In such an implementation, reception controller 7 maintains (as illustrated by act 94 in FIG. 13) another list 59 (hereinafter "button press list") that contains a list of times at which the selection signal is received, and for each time the frequency of the radio signal being received and played (in acts 82 and 83). Thereafter, when an audio program is received (as illustrated by act 91), a header for the audio program contains the begin and end times during which the related audio sample was played. Receiver 7 compares the times in the button press list against the begin and end times to determine (as illustrated by act 95) if the received audio program was identified in button press list 59 and if so stores the audio program (as illustrated by act 92) and sends a status signal (as illustrated by act 93).

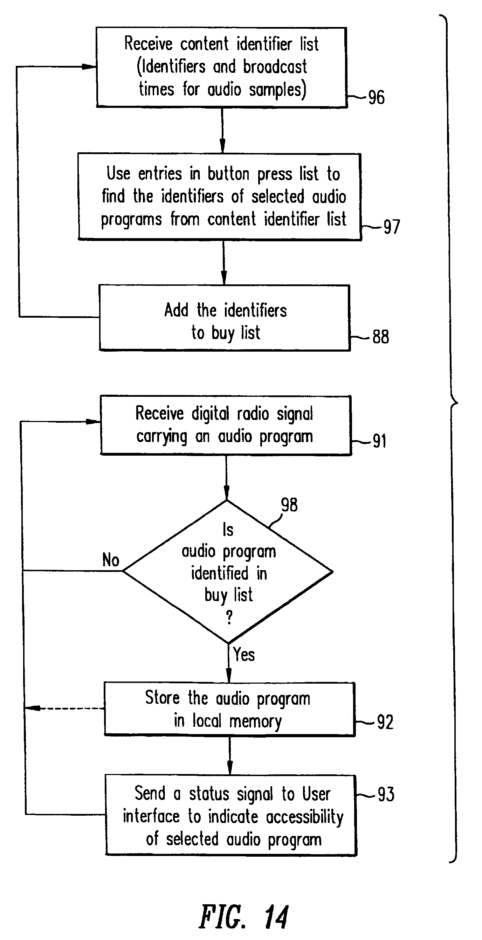

In still another implementation, content identifier list 56 is received (as illustrated by act 96 in FIG. 14) only subsequent to receipt of selection signal (in act 84 illustrated in FIG. 12). In such an implementation, after receipt of list 56, reception controller 7 uses entries in button press list 59 to find identifiers of selected audio programs (as illustrated by act 97), and thereafter adds the identifiers to Buy List 23 (as illustrated by act 88). On receipt of a digital radio signal carrying an audio program (as illustrated by act 91), reception controller 7 checks if the audio program is identified in Buy List (as illustrated by act 98) and if so stores the audio program (as illustrated by act 92) and sends a status signal (as illustrated by act 93).

Each of the implementations discussed above in reference to FIGs. 12, 13 and 14 maintains backward compatibility with existing radio stations, because a conventional analog radio signal is used in the normal manner, and audio information carried by such a radio signal is treated as audio samples. The implementation discussed above in reference to FIG. 12 requires that an existing radio station owner provide, ahead of time, a schedule of the audio information that is to be broadcast in the next time period. The schedule is then used by content provider 30 (FIG. 10) to generate content identifier list 56, which is transmitted on digital channel 51. If an existing radio station owner does not provide the broadcast schedule ahead of time, then a team of listeners may prepare such a schedule after broadcast, by simply listening to the audio information being broadcast. The identification task performed by such a team may be automated (by use of voice recognition to match each audio sample with a corresponding audio program from among a group of such audio programs, such as the "top 40 songs").

Although the above description refers to a single analog channel, a number of such analog channels may be used, and in such an implementation, a number of content identifier lists, one for each frequency need to be generated by content provider 30, and used by reception controller 7 (based on the frequency identified by playback controller 6 and stored in button press list 59). Moreover, an input sorter 33 may be included in reception controller 7 to transmit content identifier table 56 to purchase control logic 32.

In another embodiment using an analog audio signal, the signal (that carries audio samples) also carries an identifier, e.g. an identifier immediately precedes the audio sample. In this implementation, playback controller 6 (FIG. 10) extracts the identifier from the analog signal (as illustrated by an optional act 9A in FIG. 5), and supplies the extracted identifier on current id bus 19A (FIG. 8) to reception controller 7. The identifier can be transmitted in the manner described in the specification entitled "The United States RBDS Standard", August 1997, Electronic Industries Association, 2500 Wilson Blvd., Arlington, VA 22201-3834, and as illustrated at http://www.rds.org.uk. The identifier is latched (as illustrated by act 20 in FIG. 5) by controller 7 in response to an active signal on line 18 (that is connected to "BUY NOW" button 5B illustrated in FIG. 8).

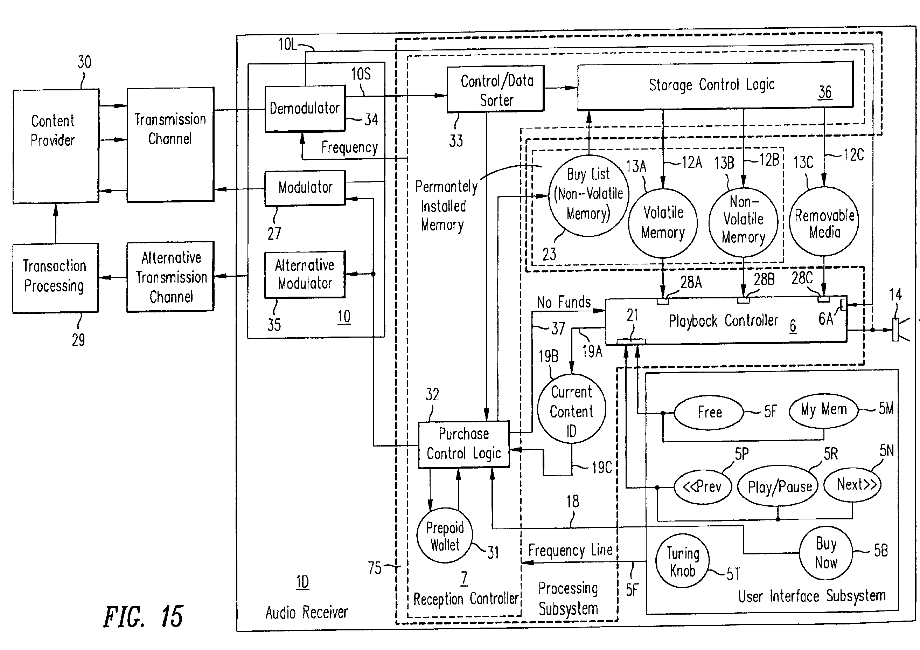

In still another embodiment, an audio receiver 1D (FIG. 15) includes, in channel interface subsystem 10, a single demodulator 34 that has two output lines, a first line 10L is coupled to port 6A of playback controller 6 to provide live audio (in the form of audio samples), and a second line 10S that is coupled via control/data sorter 33 and storage control logic 36 to one of memories 13A-13C (e.g. listed in the order of increasing perference for one embodiment). In this embodiment, reception controller 7 and playback controller 6 together form a processing subsystem (shown by a dashed box 75). Note that in this embodiment, instead of a numeric keypad, a tuning knob 5T is used for obtaining a selected FM frequency from the user, and as before, this frequency is supplied to demodulator 34 for demodulation of the selected signal.

In this embodiment, demodulator 34 includes a channel tuner 101 that tunes to a channel selected by the user, as supplied on a bus 114 by controller 111. For example, channel tuner 101 can be implemented as a FM tuner (such as Phillips TEA5757HB). Channel tuner 101 receives a signal from a selected channel (such as FM radio waves) and provides on an output line 108 a base band signal having a number of components, such as one (or two in case of stereo) audio sample signal(s), a pilot tone signal, and an audio program signal.

In this embodiment, line 108 is coupled to each of a stereo decoder 102 that decodes the stereo components in the normal manner, and supplies left and right speaker signals to a summer 109. Summer 109 is coupled to a line (not shown) in bus 114, and in response to an active signal on the line, supplies a sum of the left and right signals from decoder 102 to speaker 121. Summer 109 does not supply a signal to speaker 121 in the absence of the control signal from controller 111, thereby to allow a signal from memory subsystem 141 to be supplied to speaker 121 (e.g. to play stored audio programs). Note that if the audio receiver includes a left speaker and a right speaker (instead of a single speaker 121), then summer 109 can simply pass the two signals from decoder 102 to the two speakers.

Demodulator 34 also includes a band pass filter 103 that only passes a signal at a predetermined frequency, e.g. 66.5 KHz that is used for carrying the audio programs. Depending on the embodiment, any non-integer multiple of the pilot tone frequency can be used for carrying the audio programs assuming that an integer multiple of the pilot tone frequency is used for the audio samples. In one example, a pilot tone signal is at 19 KHz and the sum and difference stereo signals are at integer multiples of 0 and 2 respectively, i.e. at 0 KHz and 38 KHz, the audio program signal is at a non-integer multiple of 3.5, i.e. at 66.5 KHz.

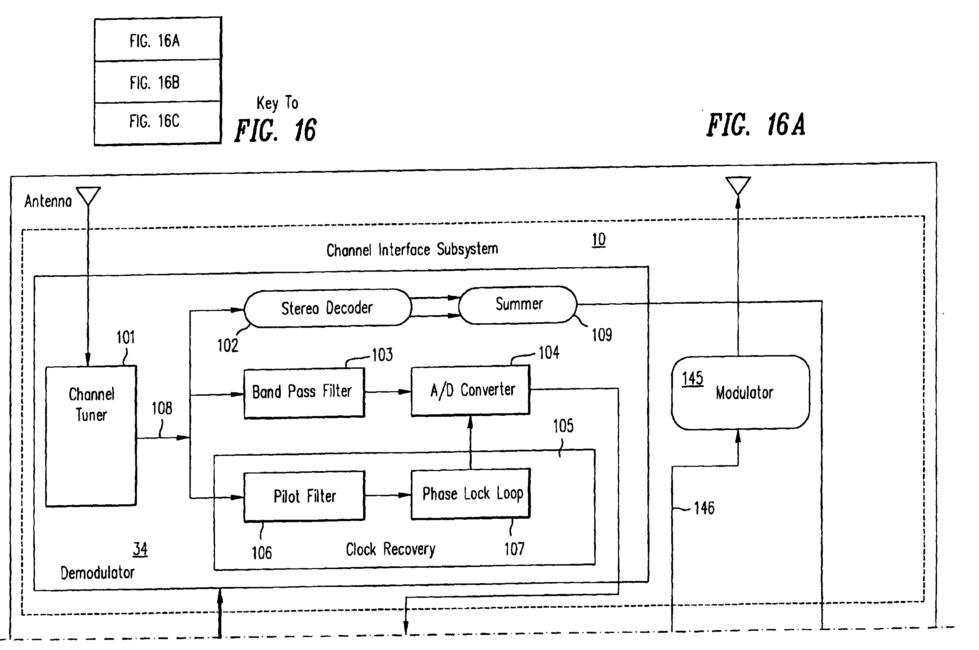

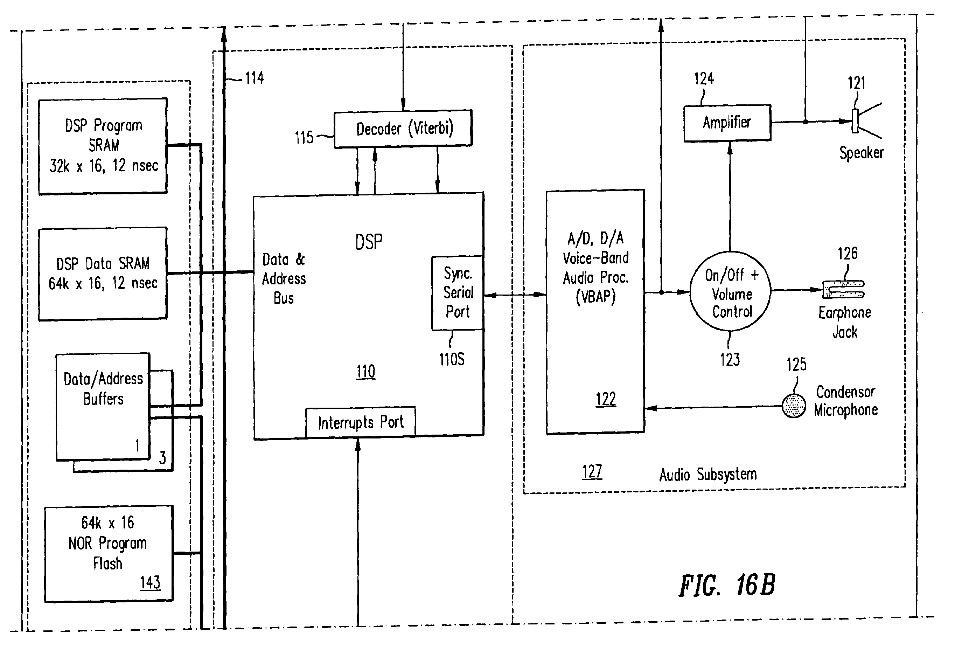

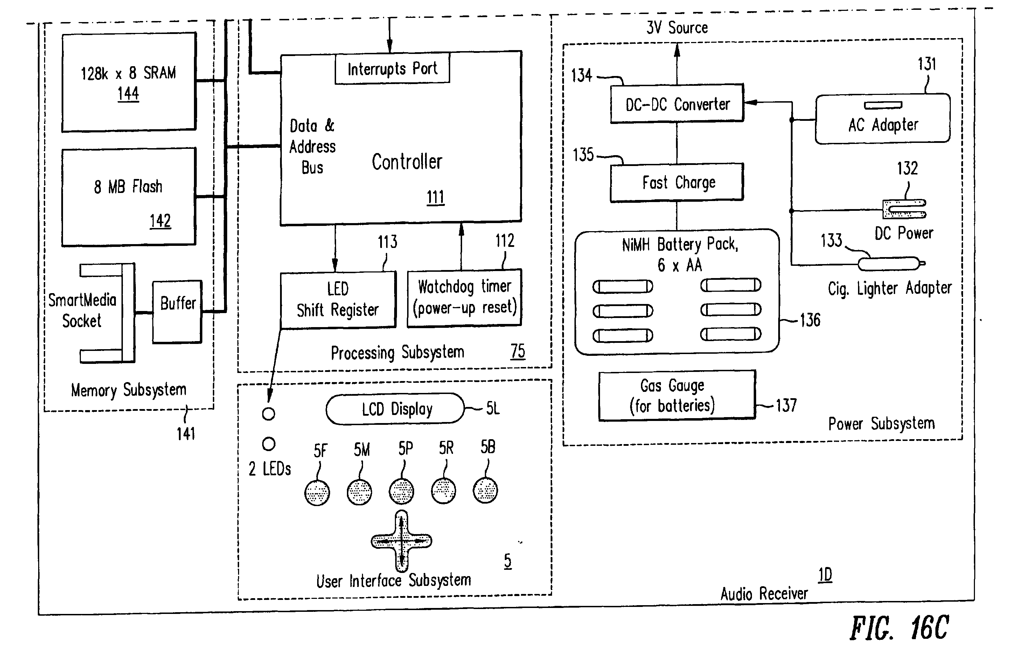

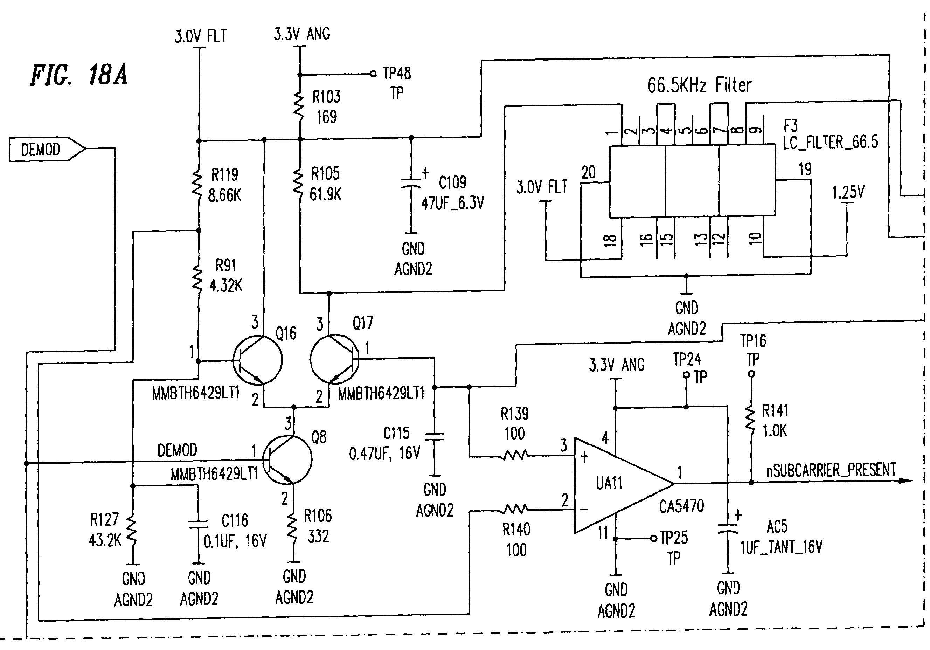

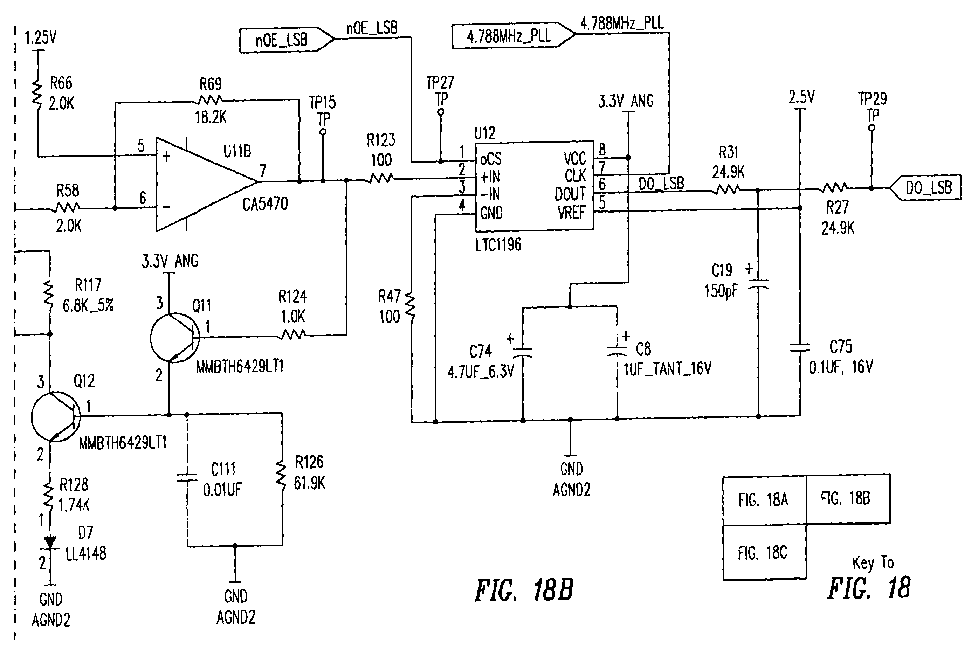

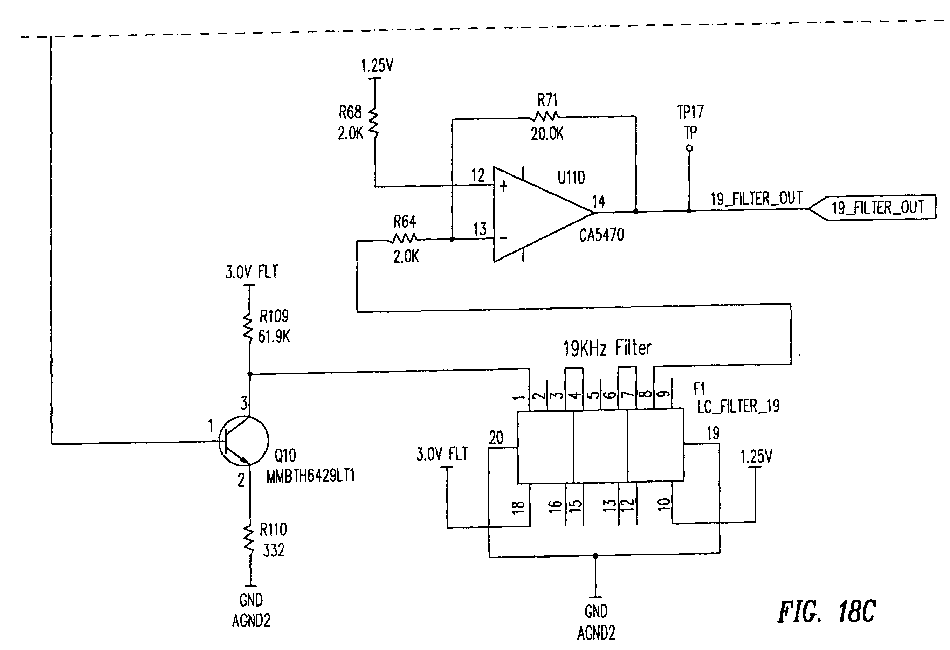

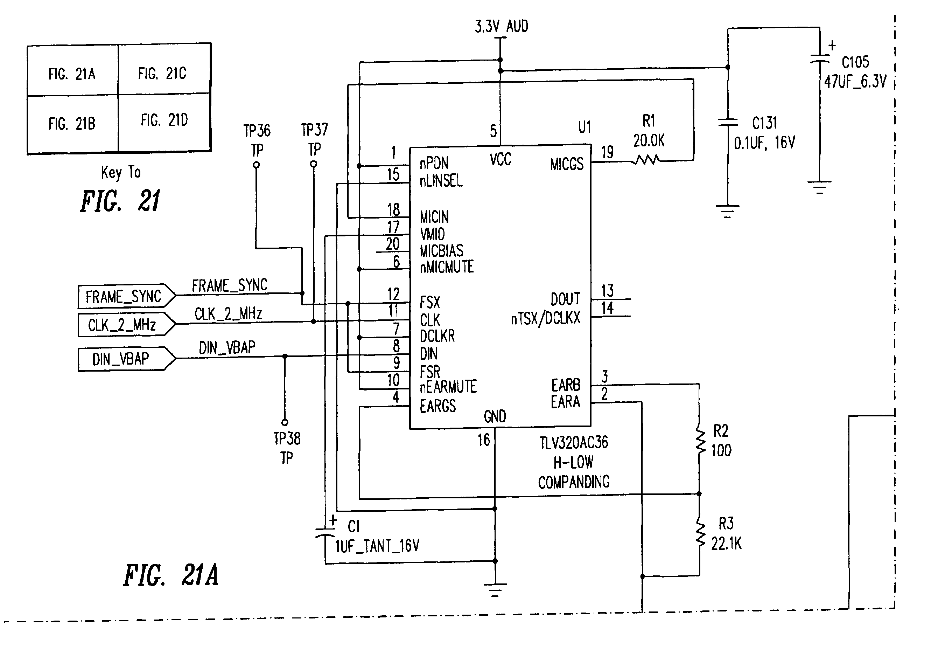

In one implementation, filter 103 has the characteristics illustrated in FIG. 20. Filter 103 supplies the filtered signal to an analog to digital (A/D) converter 104 that samples the audio program signal at a rate determined by a clock recovery circuit 105. In the embodiment illustrated in FIG. 16, clock recovery circuit 105 includes a pilot filter 106 that recovers a pilot tone signal e.g. at 19 KHz and supplies the signal to a phase lock loop circuit 107 that in turn generates the clock signal (e.g. at 4.788 MHz) for A/D converter 104. Note that A/D converter 104 can be implemented by LTC 1196 as illustrated in FIG. 18B (and described in a data sheet available from www.linear-tech.com). Also, clock recovery circuit 105 can be implemented as illustrated in FIG. 18C.

In this embodiment, A/D converter 104 supplies a digitzed signal to a decoder 115. Decoder 115 implements, for example a Viterbi method to decode the incoming signal, based on the method used by the transmitter to encode the signal, and supplies the decoded signal to a digital signal processor (DSP) 110. Depending on the implementation, decoder 115 can be implemented as an application specific integrated circuit (ASIC) or alternatively, decoder 115 can be implemented within DSP 110. In two implementations, Viterbi decoder 115 is implemented by Stanford Telecom STEL-2030B, and by Qualcomm Q1900 (described at www.qualcomm.com/ProdTech/asic/vtdec.html).

DSP 110 performs a number of functions, such as subcarrier demodulation and synchronization, error correction and detection, speech decompression (or audio decompression as appropriate), and power management for demodulator 10. DSP 110 automatically stores the signal to be decoded in memory subsystem 141, e.g. in flash memory 142. Specifically, DSP 110 interrupts controller 111 whenever a chunk of audio program is filled into a shared data buffer, and is available for storage in flash memory 142. Thereafter, when appropriate, controller 111 interrupts DSP 110 that then supplies the previously stored signal via a serial port 110S to speaker 121.

Note that DSP 110 performs acts 2 and 9A illustrated in FIG. 5, and normally works on discrete chunks of audio information (e.g. packets that contains 3 to 5 seconds of audio). In this embodiment, flash memory 141 may also implement Buy List 23 and non-volatile memory 13B illlustrated in FIG. 15, whereas prepaid wallet 7 is implemented by NOR flash memory 143 (that is also used for holding executable instructions for controller 111). Moreover, volatile memory 13A (FIG. 15) is implemented by SRAM memory 144 (FIG. 16). Furthermore, in this embodiment, reception controller 7 and playback controller 6 are together implemented by DSP 110 and controller 111. Note that depending on the implementation, all functions performed by DSP 110 can be implemented by controller 111.

Note that in the implementation illustrated in FIG. 16, operation of controller 111 is checked by a watchdog timer 112 that resets controller 111 if a signal is not received for a predetermined time period (e.g. 10 milli seconds). Controller 111 is also coupled to a user interface subsystem 5 of the type described above. In this implementation, subsystem 5 includes two light emitting diodes (LEDs) that receive a signal from controller 111 via a shift register 113. The LEDs can be used to indicate a low battery power, or low power of the selected signal, or to indicate that an audio program selected (and in one embodiment purchased) by a user is now available in memory. Controller 111 is also coupled via bus 114 to supply a frequency to a modulator 145 (included in channel interface subsystem 10) that is used for transmission of a signal to implement, e.g. a monetary transaction.

Alternatively, modulator 145 can be used for low-power transmission (as compared to a radio station) of the signal being supplied to speaker 121 on an unused frequency, e.g. for reception and play by a car radio, as illustrated by line 146. In one implementation, controller 111 is Motorola XC68307PU16V suitably programmed as described herein (e.g. to handle signals to/from user interface subsystem 5, a file system implemented in memory subsystem 141, tuning signals to/from channel interface subsystem 10, control signals to/from DSP 110, and for power management). Therefore, controller 111 also performs all acts illustrated in FIG. 5 except for any acts performed by DSP 110. For example, DSP110 decides what portion of signal denotes a 1 and what portion denotes a 0 (in acts 2, 9A and 3) whereas controller 111 handles framing bits and extracts an identifier (if appropriate).

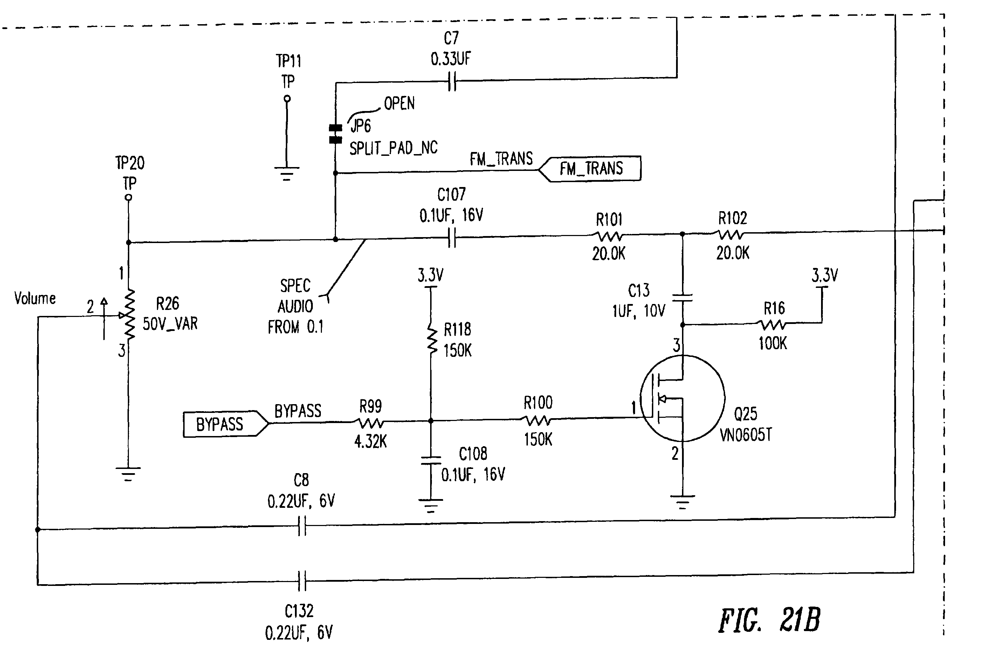

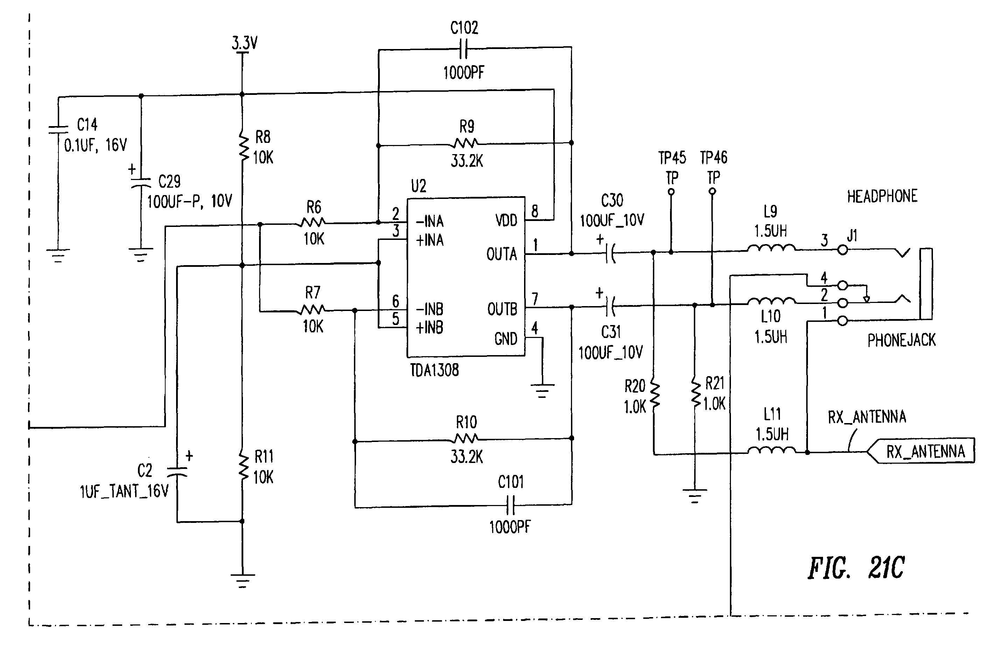

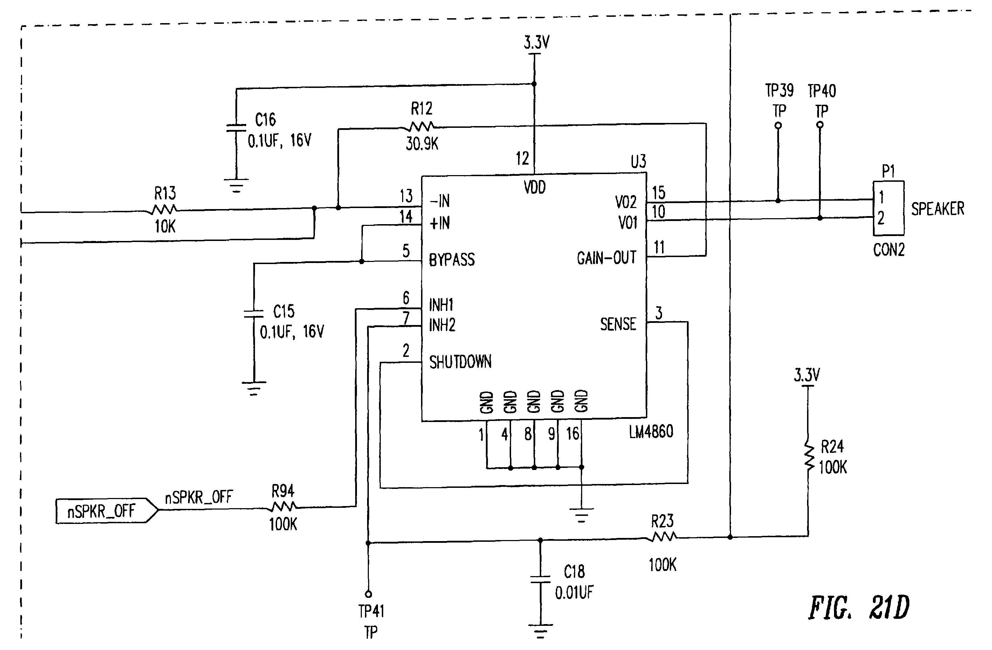

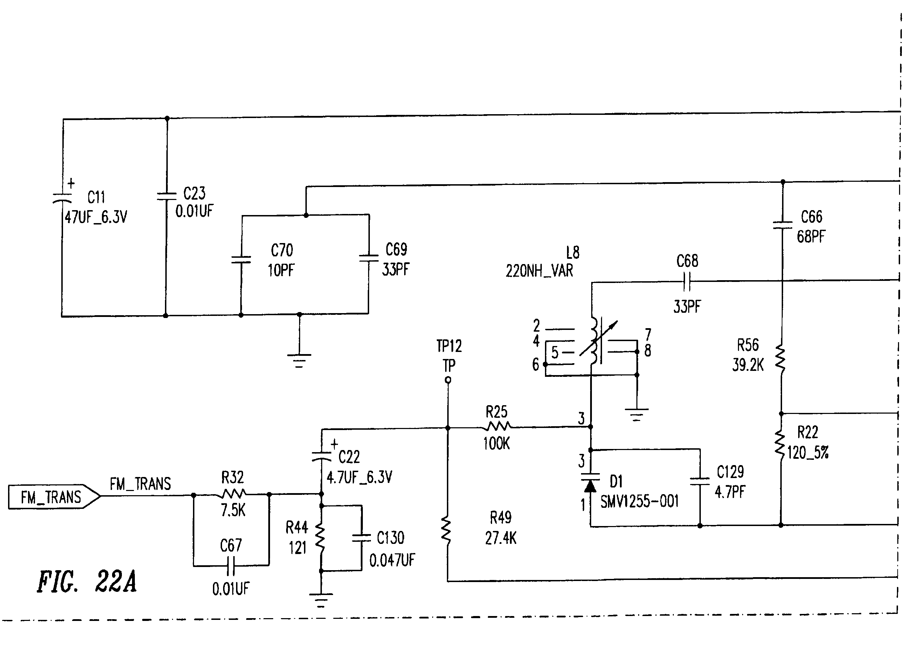

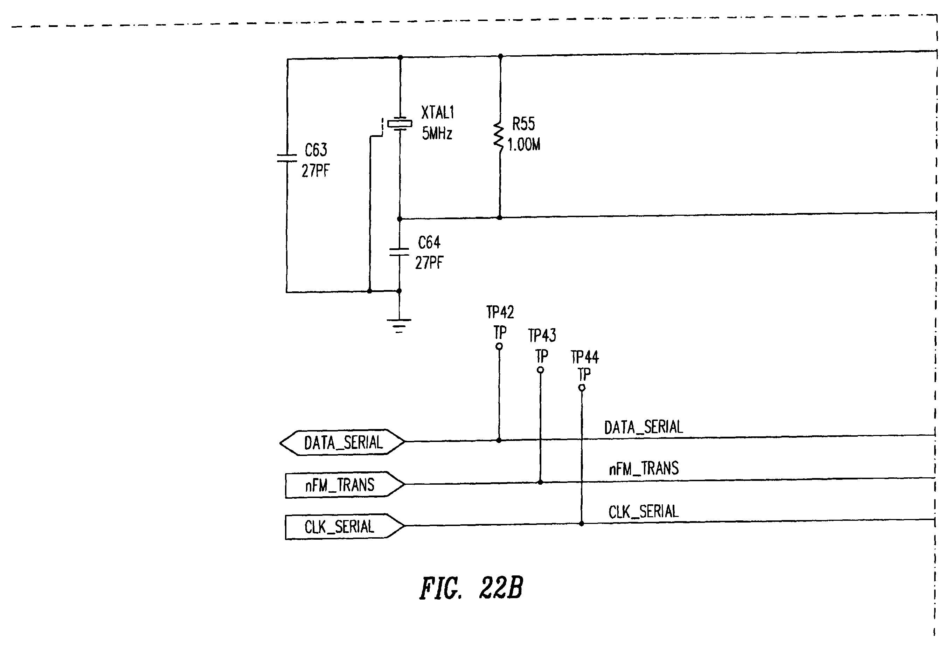

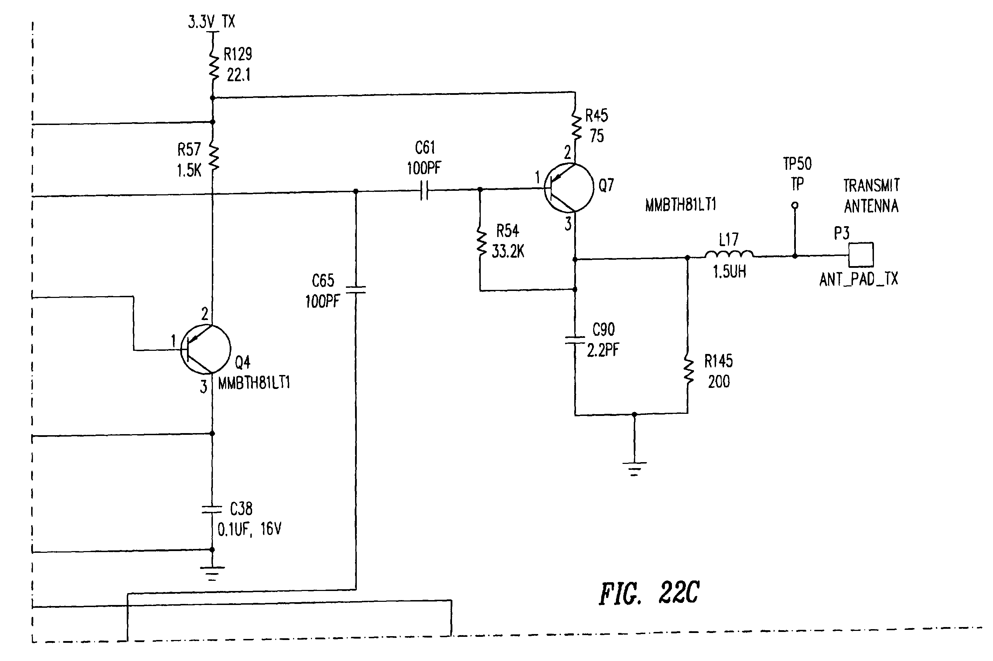

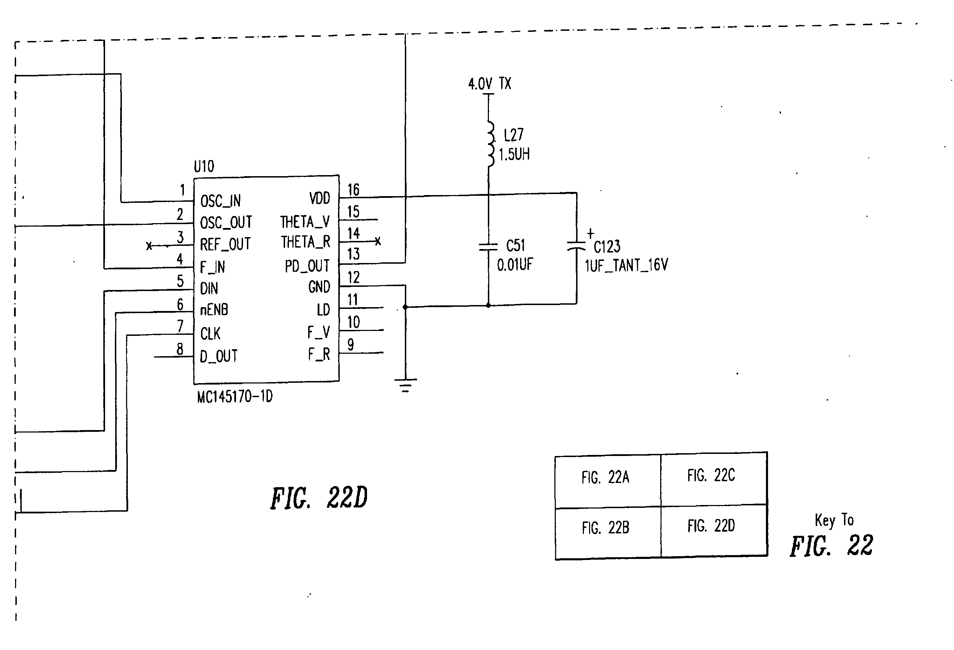

Audio subsystem 127 (FIG. 16) includes a codec 122 (such as Texas Instruments TLV320AC381DN) that performs the decoding and encoding of the digital signal received from serial port 110S of DSP 110 to supply an analog signal to amplifier 124 or to receive another analog signal from the microphone. Codec 122 is coupled to an on/off switch and volume control 123 that in turn is coupled to speaker 121 via amplifier 124. Control 123 is also coupled by line 146 to modulator 145, and optionally to earphone jack 126. Codec 122 is also coupled to a microphone 125 for receipt of a voice command from the user (to be encoded by codec 122). In one implementation, audio subsystem 127 is illustrated in FIGs. 21A-21D and modulator 145 is illustrated in FIGs. 22A-22D. This implementation includes a power subsystem formed by a DC-DC converter 134 for conversion to 3 volt output signal of either a 12 volt signal from cigarette lighter 133, or a 9 volt signal that may be supplied either by an AC adapter 131, or a DC power source 132 or a battery pack 136 (that may have a gauge 137). In two alternative implementations, modulator 145 is implemented by cell phones available from Nokia 9000il (described at http://www.shopnokia.com/), and by Ericsson GS 18.

Memory subsystem 141 can be implemented by a smartmedia socket available from Yamaichi/AMP coupled to a buffer QS3384, flash memory 142 from Toshiba TC5864FTI, SRAM 144 by IDT 71024S70Y, NOR flash 143 by AMD AM29F100B, data buffers by 74FST33B4Q, and DSP SRAMs by IDT 71V016S12Y. Smart media memory cards can be, for example, TC58V16BDC and TC58V64DC available from Toshiba.

Note that in the embodiment illustrated in FIG. 16, port 6A is not used, and instead, an analog signal generated by summer 109 is supplied directly to speaker 121 (to amplifier 124 in an alternative embodiment).

Many additional modifications and adaptations of the embodiments and implementations described herein would be apparent to the skilled artisan in view of the disclosure. For example, although audio receiver 1C (FIG. 8) has been described above in reference to acts illustrated in FIG. 9, audio receiver 1C can also be used as described above in reference to acts illustrated in FIG. 1 (e.g. to play audio samples without storage) and alternatively as illustrated in FIG. 5. Similarly, although audio receiver 1A has been described above in reference to acts illustrated in FIG. 1, audio receiver 1A can also be used as described above in reference to acts illustrated in FIG. 5 or FIG. 9. Also, one or more of acts illustrated in one of FIGs. 2, 5, 7 and 9 can be combined with one or more of acts illustrated in another of FIGs. 2, 5, 7 and 9.

As another example, acts 2, 9, 3, 8 and 4 described above in reference to FIG. 1 can be performed in any sequence, as long as act 3 is performed prior to act 8 (wherein the audio program in act 8 is related to the audio sample in act 3) to allow the user to select the audio program, and act 4 is performed prior to act 8 (thereby to require the audio program to be stored prior to playback). As yet another example, act 4 can be performed prior to, during, or subsequent to act 8. Also, the audio program and/or audio sample may be embedded in one or more signals that are carried on wires (e.g. electrical signals on a cable system), instead of FM subcarriers.

Also, audio receiver 1 can include a port (coupled to playback controller 6) for transmission of one or more audio programs to another device, either wirelessly (via a radio frequency signal), over a cable (that conforms to the RS-232 specification). As another example, the user may be instructed to enter select a unique identifier (from among a number of such identifiers) to indicate the user's interest in a related audio program. As still another example, an identifier for an audio program can be implemented as a snippet from the audio sample that is recorded on receipt of the selection signal from the user interface subsystem. Matching of the snippet with a portion of an audio program indicates tat the audio program is related to the audio sample.

Also, audio receiver 1 (FIG. 2) can include a visual display (e.g. a liquid crystal display shown in FIG. 16) that driven by playback controller 6 to display, for example, a list of audio programs available for purchase during the play of an audio sample, and in another example, the list of audio programs in memory 13 that are accessible to the user. Furthermore, the user may indicate a choice by other types of predetermined action, for example a spoken command, in which case audio receiver 1 includes a microphone (not shown in FIG. 2) that is coupled to playback controller 6 and to reception controller 7 (instead of or in addition to user interface subsystem 5).

Moreover, instead of having an integer as a predetermined identifier (e.g. a number or an alphanumeric code) of an audio program, the identifier may include a location of a user-selected audio sample in the list. Therefore, an identifier of the audio sample, and a location in the list uniquely identify the audio program to be received (or retrieved, e.g. by sending a purchase request) by such an audio receiver.

Furthermore, audio programs of both types (free and purchased) can be stored in a single non-volatile memory, although stored in different files. Depending on the implementation, such a non-volatile memory can be removable (if purchase of audio programs is permitted), or can be installed in a non-removable manner (if only rental of audio programs is permitted). Also, if only rental is permitted, all audio programs can be stored in volatile memory, so that all audio programs are lost when power is turned off.

Therefore, numerous such modifications and adaptations are encompassed by the attached claims.

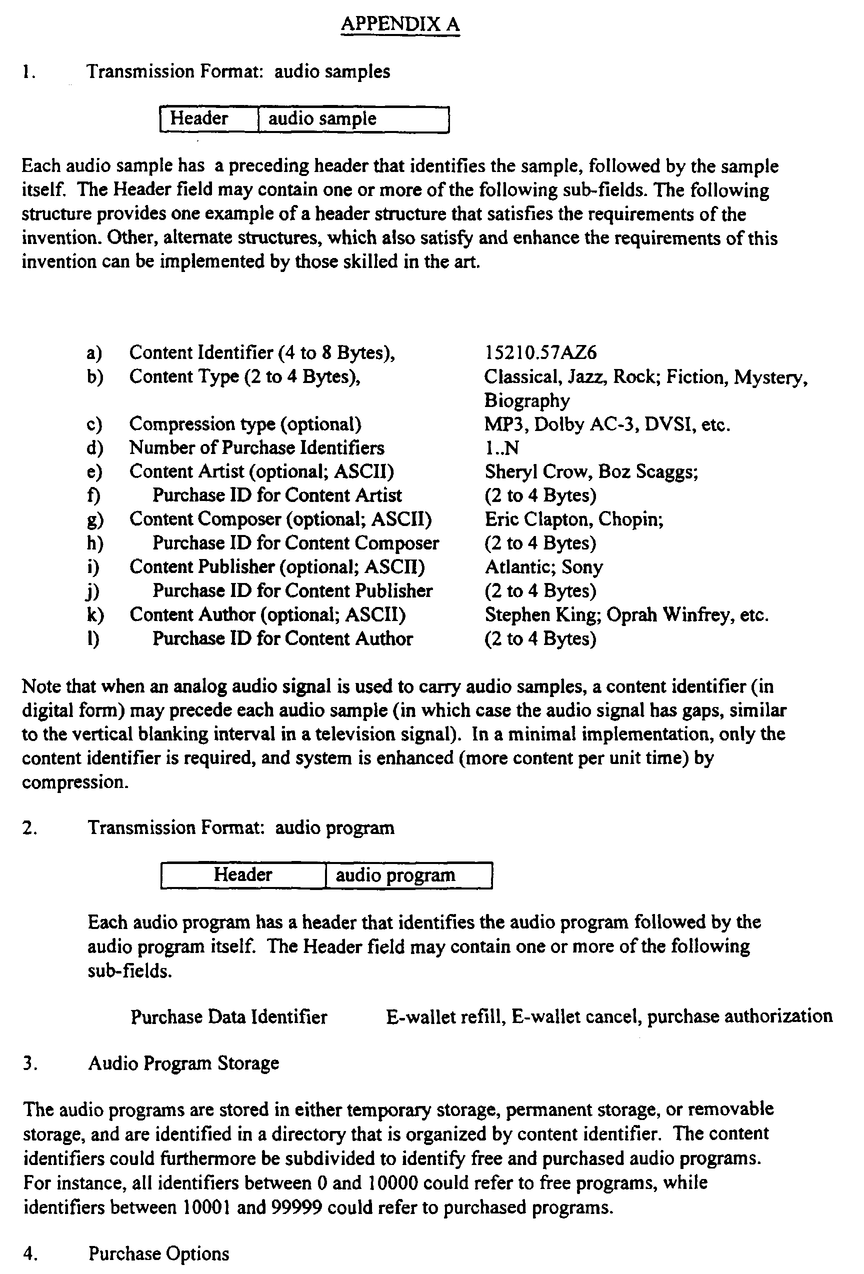

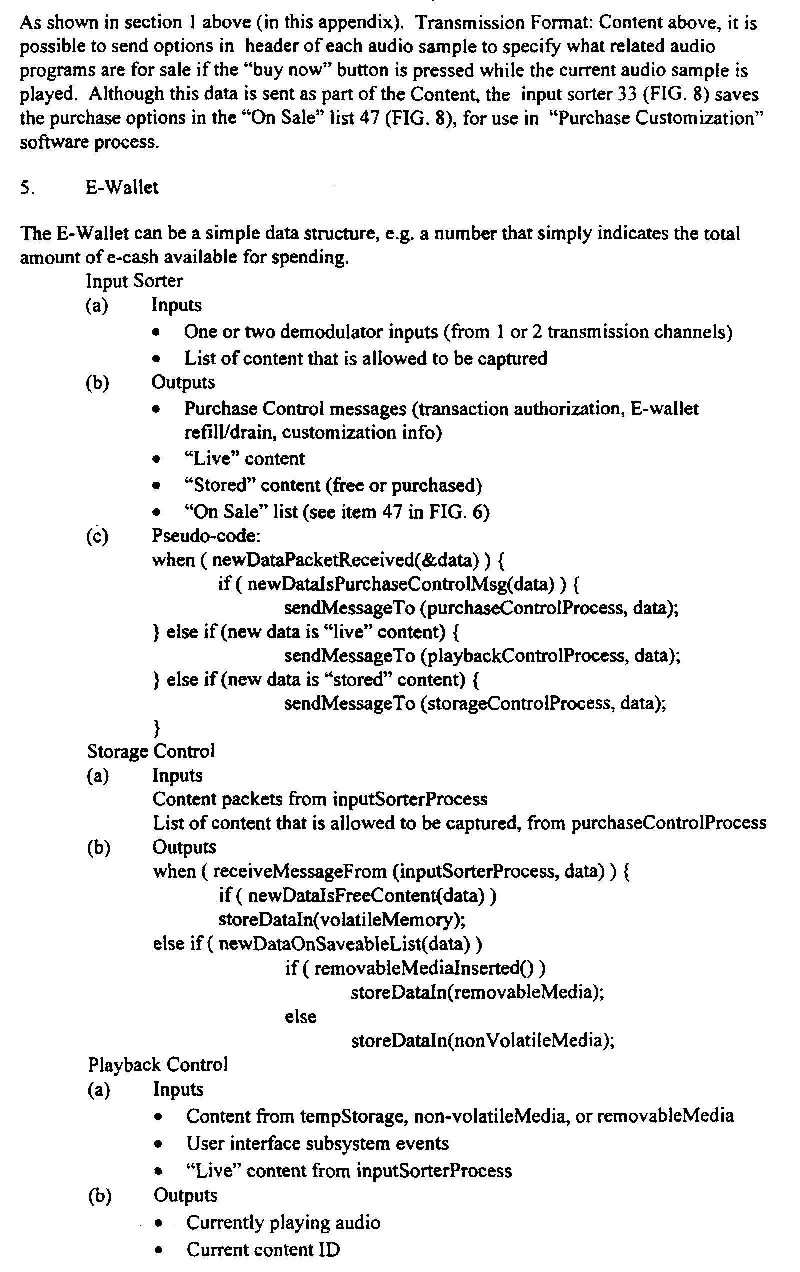

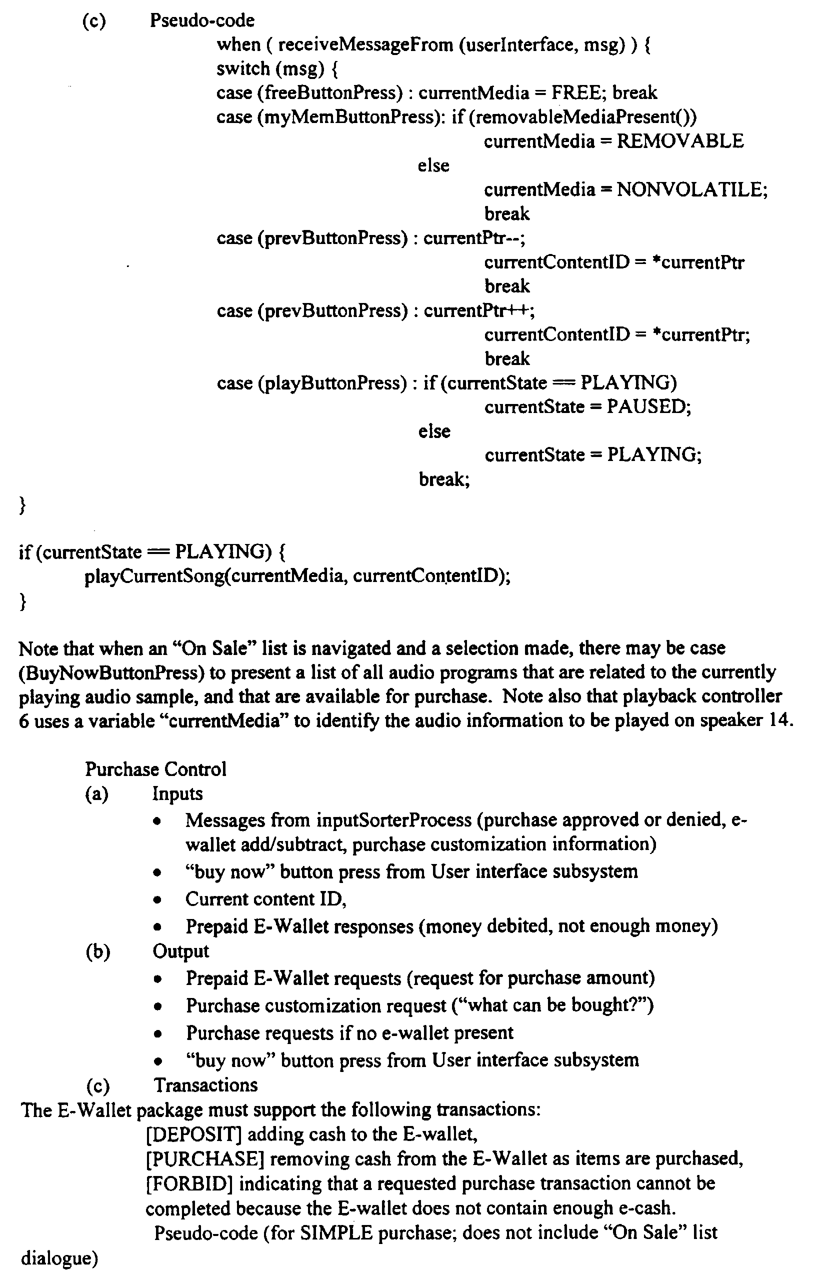

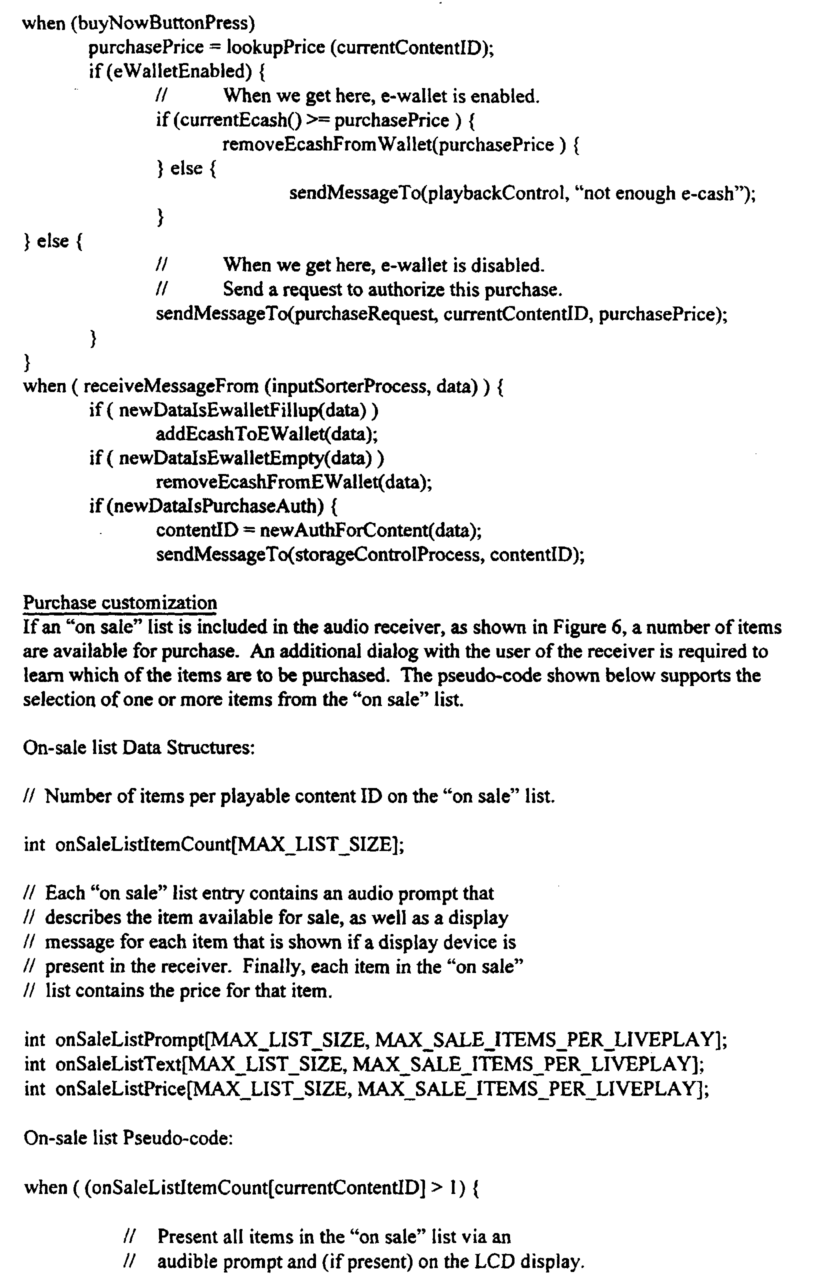

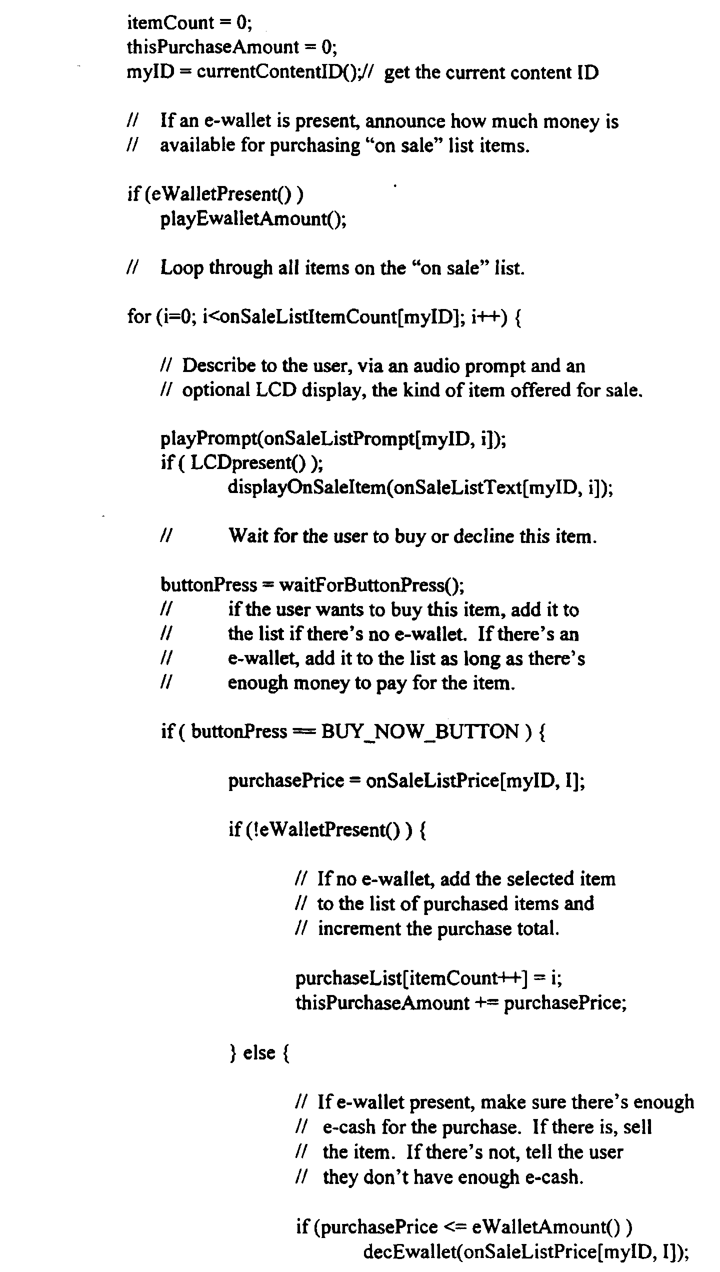

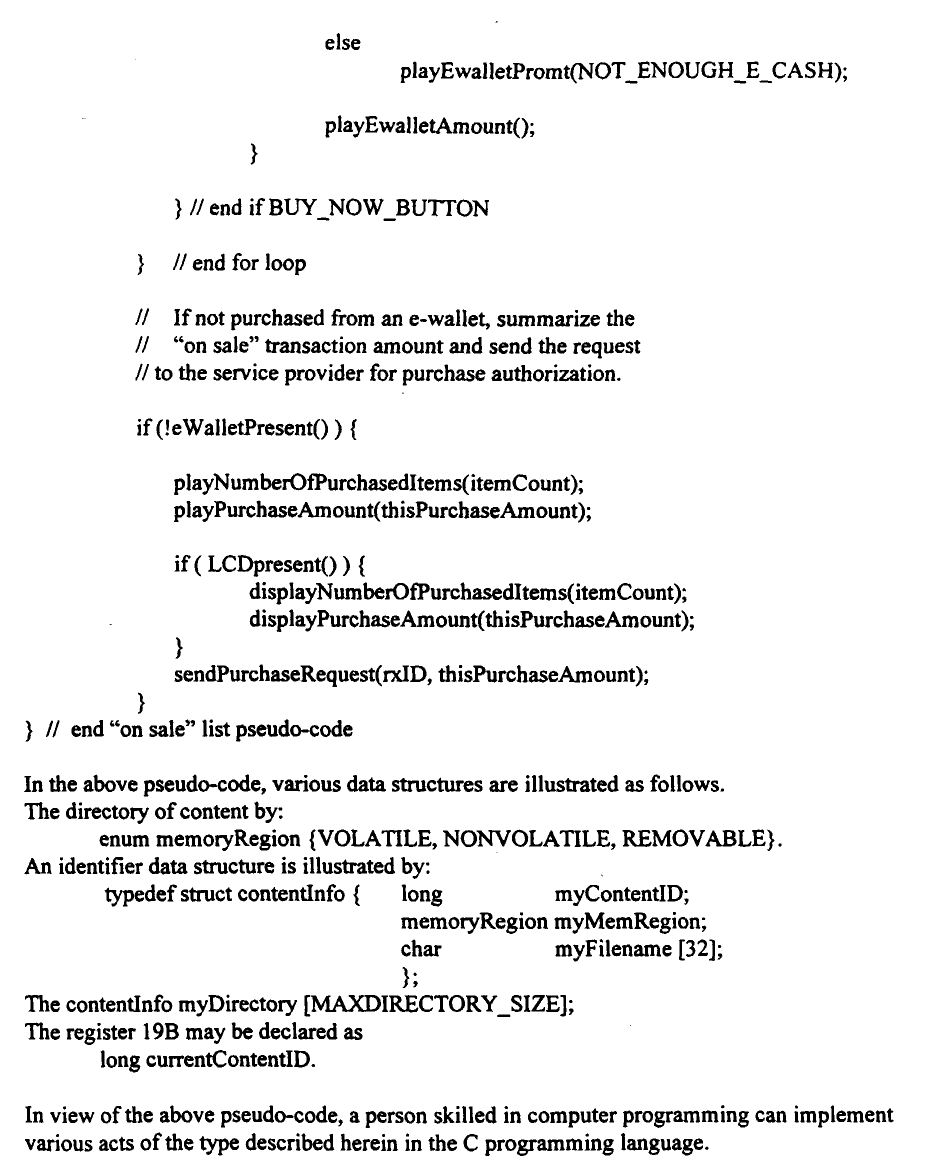

## Claims

1. A method of playing audio information performed in a device located adjacent to a user, the method comprising:
receiving audio information;
playing said audio information if said audio information is of a first kind (hereinafter "audio sample"); and
storing said audio information in a memory of the device if said audio information is of a second kind (hereinafter "audio program");
wherein said method is devoid of an act of playing said audio program prior to said storing.

2. The method of Claim 1 further comprising:
retrieving the audio program from the memory; and
playing the audio program.

3. The method of Claim 1 or 2 further comprising:
receiving from a user interface subsystem of the device a selection signal during play of the audio sample; and
storing an identifier in response to receipt of the selection signal.

4. The method of Claim 1, 2 or 3 wherein:
a plurality of audio samples including said audio sample are carried in an analog format on a first signal;
said audio program is carried in a digital format on a second signal; and
said audio program has a predetermined relation with said audio sample.

5. The method of Claim 1, 2 or 3 wherein:
a plurality of audio samples including said audio sample are carried in a digital format on a first signal; and
said audio program is carried in a digital format on a second signal; and
said audio program has a predetermined relation with said audio sample.

6. The method of Claim 1, 2 or 3 wherein:
said audio program, and a plurality of audio samples including said audio sample are carried in a compressed format on a common signal; and
the method further comprises sorting between said audio samples and said audio program;

7. The method of Claim 6 further comprising:
uncompressing each of said audio program, and said plurality of audio samples.

8. The method of any one of Claims 1 to 7 further comprising:
receiving a list of audio programs related to the audio sample, the list including the audio program; and
indicating at least a portion of the list to the user;
wherein the selection signal from the user interface subsystem is generated only after performance of the receiving and of the indicating.

9. The method any one of the preceding Claims further comprising:
generating the selection signal in the user interface subsystem in response to the pressing of a button by the user.

10. The method of any one of Claims 1 to 8 further comprising:
generating the selection signal in the user interface subsystem in response to a spoken command from the user.

11. The method of any one of the preceding Claims further comprising:
performing a monetary transaction on an account of the user to pay for the audio program.

12. The method of any one of the preceding Claims further comprising:
receiving from a user interface subsystem of the device a selection signal; and
using time of receipt of the selection signal to determine an identifier.

13. The method of any one of the preceding Claims wherein a plurality of audio samples including said audio sample are carried in an analog format on a first signal, said first signal also carrying a plurality of identifiers in a digital format, each identifier corresponding to an audio sample in said plurality of audio samples, and a plurality of audio programs including said audio program are carried in a digital format on a second signal, and each audio program is identified by an identifier in said plurality of identifiers, the method further comprising:
extracting an identifier from said first signal; and
storing said identifier in response to receipt of the selection signal.

14. The method of any one of the preceding Claims further comprising:
prior to said playing, storing said audio information in said memory if said audio information is an audio sample.

15. A radio frequency electromagnetic signal embedded with:
a plurality of audio samples; and
at least one audio program related to an audio sample in the plurality.

16. The radio frequency electromagnetic signal of Claim 15 wherein:
said audio program is carried prior to said audio sample.

17. The radio frequency electromagnetic signal of Claim 15 wherein:
said audio program is carried subsequent to said audio sample.

18. The radio frequency electromagnetic signal of Claim 15 wherein:
said audio program is carried contemporaneous with said audio sample.

19. The radio frequency electromagnetic signal of any one of Claims 15 to 18 wherein:
said audio sample includes two components and at least one component is modulated at a first frequency that is an integer multiple of a pilot tone frequency; and
said audio program is modulated at a second frequency that is non-integer multiple of the pilot tone frequency.

20. The radio frequency electromagnetic signal of Claim 19 wherein:
said first frequency is two times the pilot tone frequency.

21. A plurality of radio frequency electromagnetic signals, including:
a first signal embedded with a plurality of audio samples; and
a second signal embedded with an audio program, said audio program being related to an audio sample in the plurality.

22. The plurality of radio frequency electromagnetic signals of Claim 21 wherein:
said first signal carries said audio samples in analog form; and
said second signal carries said audio program in digital form.

23. The plurality of radio frequency electromagnetic signals of Claim 21 wherein:
said first signal carries said audio samples in digital form; and
said second signal carries said audio program in digital form.

24. The plurality of radio frequency electromagnetic signal or signals of Claim 15 or 21 wherein:
said audio sample and said audio program are related by a common identifier; and
said audio sample and said audio program are each preceded by a header, said header including at least said common identifier.

25. A method of playing audio information performed in a device located adjacent to a user, the method comprising:
receiving an analog radio signal carrying a plurality of audio samples;
playing the plurality of audio samples;
receiving a digital radio signal carrying at least an audio program, said audio program being related to one of said audio samples; and
storing said audio program on receipt.

26. The method of Claim 25 further comprising:
playing said stored audio program only after receipt of a selection signal during play of said related audio sample.

27. The method of Claim 26 further comprising:
receiving said selection signal prior to said "receiving a digital radio signal"; and
storing an identifier in response to receipt of the selection signal.

28. The method of Claim 25, 26 or 27 further comprising:
receiving said selection signal subsequent to said "receiving a digital radio signal" and during play of said related audio sample; and
playing said stored audio program on receipt of said selection signal.

29. The method of Claim 25, 26, 27 or 28 further comprising:
receiving a list of identifiers and broadcast times for said audio samples; and
using a current time to determine from said list an identifier of an audio sample being currently played.

30. The method of any one of Claims 1 to 10 or Claim 25 to 29 further comprising:
performing a monetary transaction on an account of the user to pay for the audio program.

31. A device for playing audio information to a user, the device comprising:
a memory;
a speaker coupled to the memory; and
a channel interface subsystem having a first output line coupled to the memory, the channel interface subsystem further having a second output line coupled to the speaker in a switchable manner relative to coupling of the speaker to the memory.

32. The device of Claim 31 further comprising a user interface subsystem, wherein:
the device detaches the speaker from the memory and couples the speaker to the channel interface subsystem in response to a first signal from the user interface subsystem; and
the device detaches the speaker from the channel interface and couples the speaker to the memory in response to a second signal from the user interface subsystem while the speaker is coupled to the channel interface subsystem.

33. The device of Claim 32 further comprising:
a playback controller coupled between the speaker and the memory; and
a reception controller coupled between the channel interface subsystem and the memory; wherein:
each of the reception controller and the playback controller are coupled to the user interface subsystem.

34. The device of Claim 33 wherein:
the channel interface includes a modulator;
the reception controller includes a purchase control logic coupled each of the modulator, the playback controller and the user interface, the purchase control logic performing a monetary transaction on an account of the user to pay for an audio program related to an audio sample being supplied on the second output line of the channel interface subsystem in response to an active signal from the user interface subsystem.

35. The device of Claim 34 wherein:
the reception controller includes a purchase customization logic coupled to the purchase control logic and to the user interface.

36. The device of Claim 35 wherein the memory holds:
a list of audio programs related to an audio sample currently being supplied on the second output line.

37. The device of any one of Claims 31 to 36 wherein:
the memory includes a removable storage media.

38. The device of any one of Claims 31 to 37 wherein:
the memory holds a plurality of audio programs received by the channel interface subsystem and supplied on the first output line while the speaker is coupled to the second output line of the channel interface subsystem.

39. The device of Claim 38 wherein:
the channel interface subsystem supplies on the second output line a plurality of audio samples, and each audio program in the plurality of audio programs in the memory is related to an audio sample in the plurality of audio samples.

40. The device of Claim 39 wherein:
the memory includes a plurality of identifiers for the audio programs in a Buy List; and
the purchase control logic adds an identifier to the Buy List after performing the monetary transaction for an audio program identified by the identifier.

41. The device of any one of claims 31 to 40 wherein the channel interface subsystem includes:
a channel tuner having a tuner output line;
a stereo decoder coupled to the tuner output line and to the speaker;
a band pass filter coupled to the tuner output line;
an analog to digital (A/D) converter coupled to the band pass filter; and
a clock recovery circuit coupled to the tuner output line and to the A/D converter.

42. The device of Claim 41 further comprising:
a processor subsystem coupled between the A/D converter and the speaker.
